# EUROPEAN PATENT APPLICATION

(11) **EP 4 830 537 A1**
(43) Date of publication of application: **28.10.2026**
(21) Application number: 26172677.2
(22) Date of filing: 16.04.2026
(51) Int. Cl.: A23L 29/262, A23L 2/58, A23L 33/24

(54) **WHITENING COMPOSITIONS**

(30) Priority: 23.04.2025 EP 25172063
(71) Applicant: Oterra A/S, 2900 Hellerup (DK); Seprify AG, 1723 Marly (CH)
(72) Inventor: Dunker, Carolin, 2970 Hoersholm (DK); Letellier, Guillaume, 2970 Hoersholm (DK); Schertel, Lukas, 1723 Marly (CH); Hamad, Wadood, 1723 Marly (CH)
(74) Representative: Willnegger, Eva

(57) **Abstract**

Use of a whitening, cloudifying or opacifying composition comprising
• a cellulose particle population having
- a mean average length (D50) of from 1000 to 5000 nm, as measured by scanning electron microscope (SEM),
- a mean average width (D50) of from 200 to 1000 nm, as measured by scanning electron microscope (SEM),
- a mean average aspect ratio (D50) of from 2 to 18,

• optionally a colorant, Coloring Foodstuff or Juice Concentrate for whitening, cloudifying, or opacifying an edible matrix,
wherein the edible matrix is food or beverage, and
wherein the concentration of the cellulose particle population is from 0.5 w% to 10.0 w%, preferably from 0.5 w% to 4 w%, even more preferably from 0.5 w% to 3 w% as compared to the total weight of the edible matrix after addition of the cellulose particle population.

## Description

### FIELD OF THE INVENTION

The present invention relates to cellulose-based compositions suitable for replacing TiO2.

### BACKGROUND

### Titanium dioxide as a whitening or opacifying agent

Many food, or beverage applications require a whitening composition to provide whiteness or opacity. Traditionally, TiO2 has been used in white consumer food products for example dragees, hard candies, chewing gum, white sauces, cake icing. It is also used in alternative applications like sunscreen, paints, vitamins and toothpaste.

Titanium dioxide is usually labelled in food as "Color: E171" (EU), "Colored with titanium dioxide" (US), "Color INS 171" (CODEX) or simply titanium dioxide.

Effective May 6th, 2021, the European Food Safety Authority (EFSA) updated its evaluation and revises the outcome of its previous assessment from 2016, which highlighted the need for more research to fill data gaps.

Effective August 2022, the EU banned titanium dioxide as a food additive (E171) due to safety concerns related to genotoxicity and inhalation risks.

### Titanium dioxide nanoparticles

Nanomaterial particles are any particles below 100nm*.

According to the EU regulatory provisions, TiO2 is considered a nanomaterial if 50% or more of the total particles are in the range of 1-100nm as defined by the proportion of solid particles (number of particles, BET). However, some member states such as France apply stricter criteria.

### Traditional Cellulose-based alternatives to Titanium dioxide

Traditional cellulose nanocrystals have mean average aspect ratio from 20 to 40. Cellulose nanofibers generally have a mean average aspect ratio of 50 or more.

### Prior art

WO2023135261A1 to Seprify discloses cellulose microparticles prepared by acid hydrolysis. The cellulose microparticles have a width of 520 nm and a length of 2706 nm with an average mean average aspect ratio of 5.2 (Example 1).

The cellulose microparticles of Example 2 have a width of 212 nm and a length of 1944 nm with an average mean average aspect ratio of 9.2. The document teaches that the size and low mean average aspect ratio improve scattering.

### BRIEF DESCRIPTION OF THE INVENTION

The inventors surprisingly found that the cellulose particle population are suitable as natural whitening, cloudifying or opacifying agents in an edible matrix, the edible matrix being food or beverage, while not having the regulatory concerns associated with nanoparticles. The cellulose particle population applied in a food matrix or in a beverage matrix does not have the safety concerns associated with the use of titanium dioxide. The cellulose particle population applied in a food matrix or in a beverage matrix does not have the viscosity concerns associated with carboxymethylcellulose (CMC). The inventors further surprisingly found that
▪ the use of the cellulose particle population does not negatively impact the pH of a food product or of a beverage product,
▪ the cellulose particle population is well dispersible in a liquid edible matrix.

Accordingly, a first aspect of the invention is the use of a whitening, cloudifying or opacifying composition comprising
▪ a cellulose particle population having
   - a mean average length (D50) of from 1000 to 5000 nm, as measured by scanning electron microscope (SEM),
   - a mean average width (D50) of from 200 to 1000 nm, as measured by scanning electron microscope (SEM),
   - a mean average aspect ratio (D50) of from 2 to 25, preferably from 2 to 18,
▪ optionally a colorant, Coloring Foodstuff or Juice Concentrate

for whitening, cloudifying, or opacifying an edible matrix,
wherein the edible matrix is food or beverage, and
wherein the concentration of the cellulose particle population is from 0.5 w% to 10.0w%, preferably from 0.5 w% to 4 w%, even more preferably from 0.5 w% to 3 w% as compared to the total weight of the edible matrix after addition of the cellulose particle population.

In another aspect, the L* value at a given a* and b* value is increased by 2.5 points or more, preferably by 5 points or more even more preferably by 10 points or more as compared to a matrix without the cellulose particle population and wherein the L* value is measured by Datacolor 650/850/1050 and CIE L*a*b*-system in reflection mode for non-transparent food samples.

In another aspect, the turbidity is increased when adding the cellulose particle population by 20 NTU points or more, preferably by 30 NTU points or more when the cellulose particle population is compared to a commercial available MCC in a dosage range between 0.05 g/L and 0.1 g/L and wherein the turbidity is measured by the amount of light scattered at the detector (Nephelometric Turbidity Units). The size of the cuvette used is 28 x 70 mm.

In another aspect, no pigment is added to the whitening, cloudifying or opacifying composition.

In another aspect, no pigment is present in the whitening, cloudifying or opacifying composition and wherein one or more pigments are added to the edible matrix.

In another aspect, a pigment is added to the whitening, cloudifying or opacifying composition.

In another aspect, the family of pigment is one or more of the following riboflavins, chlorophyll(in)s, caramels type A, B, C, D, fruit and vegetable concentrates, burnt sugars, vegetable carbon, carotenoids (comprising carotenes and xanthophylls, lycopene), apocarotenoids, betalains, anthocyanins, calcium carbonate, Iron oxides and hydroxides, curcuminoids, Tartrazine, Anthraquinones-based pigments and their lakes derivatives (comprising carminic acid and carmine-lakes), iridoids, phycobiliproteins, azaphilones, Azorubine and Carmoisine, Allura Red, Patent Blue, Indigotine, Indigo carmine, Brilliant Blue, Green S, Brilliant Black, Brown HT.

In another aspect, the food is one or more of a
▪ A confectionery product, preferably a hard-panned or a soft-panned confectionary product, even more preferably a hard-panned dragee, hard-panned chewing gum, a soft-panned jellybean, an instant jelly dessert, and/or a soft-panned licorice egg;
▪ A milk-based product or a milk-replacement product, preferably, a coffee creamer or a plant-based milk product, wherein the milk-based product or the milk-replacement optionally are UHT-treated; a yoghurt product or a plant-based yoghurt product,
▪ A beverage product, preferably a non-alcoholic beverage product, even more preferably a non-alcoholic powdered soft drink or a water-based beverage product, such as water,
▪ A fruit-based product, preferably a fruit preparation or a fruit slurry,
▪ A decorative food product, such as bakery decoration, a fondant, or a glazing, or a buttercream frosting,
▪ A fish-based product, or a fish-replacement product, preferably, a surimi product,
▪ A meat-product or a plant-based meat product, preferably a plant-based chicken or turkey product;

In another aspect, the food matrix is a panned confectionary product, and the concentration of the cellulose particle population is from 2.5 w% to 10.0 w%, preferably from 2.5 w% to 5.0 w% calculated to the amount used in the panning syrup.

In another aspect, the food matrix is another Confectionary product like jelly gum or hard-boiled candy, and the concentration of the cellulose particle population is from 0.25 w% - 6.0 w%, preferably from 1.0 w% to 3.0 w%.

In another aspect, the food matrix is a beverage product, preferably a non-alcoholic beverage product, even more preferably a non-alcoholic powdered soft drink or a water-based beverage product, such as water powder soft drink and the concentration of the cellulose particle population is from 0.5 w% to 10.0 w%, preferably from 0.5 w% to 2.0 w% calculated to the amount used in powdered soft drink mix.

In another aspect, the food matrix is a milk-based product or a milk-replacement product, preferably, a coffee creamer or a plant-based milk product, wherein the milk-based product or the milk-replacement optionally are UHT-treated; a yoghurt product or a plant-based yoghurt product, and the concentration of the cellulose particle population is from 1.0 w% to 10.0 w%, preferably from 1.0 w% to 5 w%

In another aspect, the food matrix is a decorative food product, such as bakery decoration, a fondant, or a glazing, or a buttercream frosting, and the concentration of the cellulose particle population is from 1.0 w% to 4.0 w%, preferably from 1.5 w% to 3.0 w%

In another aspect, the food matrix is a fish-based product, or a fish-replacement product, preferably, a surimi product, and the concentration of the cellulose particle population is from 1.0 w% to 4.0 w%, preferably from 1.0 w% to 2.5 w%.

In another aspect, the food matrix is a meat-product or a plant-based meat product, preferably a plant-based chicken or turkey product, and the concentration of the cellulose particle population is from 1.5 w% to 7.5 w%, preferably from 2.5 w% to 5.0 w%.

In another aspect, the food matrix is a savoury product like a soup, sauce or dressing, and the concentration of the cellulose particle population is from 0.3 w% to 6.0 w%, preferably from 0.35 w% to 3.0 w%.

The concentration ranges of the cellulose particle population in the food matrix refer to the total weight of the food matrix.

Another aspect of the present invention is an edible matrix comprising the whitening, cloudifying or opacifying composition of the invention,
wherein the whitening, cloudifying or opacifying composition comprises,
   ▪ a cellulose particle population having
      - a mean average length (D50) of from 1000 to 5000 nm, as measured by scanning electron microscope (SEM),
      - a mean average width (D50) of from 200 to 1000 nm, as measured by scanning electron microscope (SEM),
      - a mean average aspect ratio (D50) of from 2 to 25, preferably from 2 to 18,
   ▪ optionally a colorant, Coloring Foodstuff or Juice Concentrate,
wherein the edible matrix is a food or a beverage, and
wherein the concentration of the cellulose particle population is from 0.5 w% to 10.0 w%, preferably from 0.5 w% to 4 w%, even more preferably from 0.5 w% to 3 w% as compared to the total weight of the edible matrix after addition of the cellulose particle population.

### DETAILED DESCRIPTION OF THE INVENTION

The invention is now described in further detail.

### Natural

In one embodiment, the whitening, cloudifying or opacifying compositions are natural. In one embodiment, natural means that the pigments, the whitening or the opacifying agents of the present disclosure are sourced from plants, microorganisms, or animals or identical to those from plants, microorganisms, or animals.

### Vegan

In one embodiment, the natural whitening, cloudifying or opacifying composition are vegan, i.e. free of animal-derived components.

### Composition

Any composition comprising one or more ingredients.

### Pigment

Pigment is understood to be any particle or compound that reflects a certain wavelength of light in the visible spectrum.

Definitions of Colorant, Coloring Foodstuff and Juice Concentrate for EU
**Colorant - defined** as "colours" in Europe under EU Regulation 1333/2008/EC. This is the legal definition:
   *'colours' are substances which add or restore colour in* a *food and include natural constituents of foods and natural sources which are normally not consumed as foods as such and not normally used as characteristic ingredients of food. Preparations obtained from foods and other edible natural source materials obtained by physical and*/*or chemical extraction resulting in a selective extraction of the pigments relative to the nutritive or aromatic constituents are colours within the meaning of this Regulation.*
**Coloring Foodstuff** describes an industry term and created by NATCOL with the following definition:
   *'colouring foods' are foods with colouring properties used for the primary purpose of imparting colour to food and beverage products. They are obtained from foods like fruits, vegetables, flowers, spices, algae and*/*or other edible source materials. "Colouring Foods" have not been obtained by way of 'selective extraction', which differentiates them from food additives (colours) (see Annex I (2) of Regulation (EC) 1333*/*2008, and the Scope* as *defined in Chapter 1, 3 and 4 of the present Code)*
**Juice concentrates** is a term defined by Council Directive 2001/112/EC as follows:
   *'concentrated fruit juice': The product obtained from fruit juice of one or more fruit species by the physical removal of a specific proportion of the water content. Where the product is intended for direct consumption, the removal shall be at least 50 % of the water content. Flavour, pulp and cells obtained by suitable physical means from the same species of fruit may be restored to the concentrated fruit juice.*
**Colorant** is defined as in the USFDA Regulation 21 CFR 70.3 (f):
   A *color additive* is any material, not exempted under section 201(t) of the act, that is a dye, pigment, or other substance made by a process of synthesis or similar artifice, or extracted, isolated, or otherwise derived, with or without intermediate or final change of identity, from a vegetable, animal, mineral, or other source and that, when added or applied to a food, drug, or cosmetic or to the human body or any part thereof, is capable (alone or through reaction with another substance) of imparting a color thereto. Substances capable of imparting a color to a container for foods, drugs, or cosmetics are not color additives unless the customary or reasonably foreseeable handling or use of the container may reasonably be expected to result in the transmittal of the color to the contents of the package or any part thereof. Food ingredients such as cherries, green or red peppers, chocolate, and orange juice which contribute their own natural color when mixed with other foods are not regarded as *color additives;* but where a food substance such as beet juice is deliberately used as a color, as in pink lemonade, it is a *color additive.* Food ingredients as authorized by a definitions and standard of identity prescribed by regulations pursuant to section 401 of the act are *color additives,* where the ingredients are specifically designated in the definitions and standards of identity as permitted for use for coloring purposes. An ingredient of an animal feed whose intended function is to impart, through the biological processes of the animal, a color to the meat, milk, or eggs of the animal is a color additive and is not exempt from the requirements of the statute. This definition shall apply whether or not such ingredient has nutritive or other functions in addition to the property of imparting color. An ingested drug the intended function of which is to impart color to the human body is a *color additive.* For the purposes of this part, the term *color* includes black, white, and intermediate grays, but substances including migrants from packaging materials which do not contribute any color apparent to the naked eye are not *color additives.*

### White

White is to be understood to reflect all wavelengths of light in the visible spectrum.

### Whitening agent

Whitening agent means that the ingredient confers whitening properties to a matrix, the matrix being food or beverage.

Whitening properties generally means an increased L* value at a given a* and b* value as compared to a matrix without the cellulose particle population.

In one embodiment, the color measurement is done with Datacolor 650/850/1050 (illuminant D65/10°), and CIE L*a*b*-system. The samples are generally measured in transmission or reflection modus as follows:
▪ The transmission mode is used for transparent food samples. The reflection mode is used for non-transparent food samples, such as oat milk, fondant, glazing, buttercream frosting, cream soup type gravy, surimi, beverage creamer, using large opening LAV.
▪ The following applications are measured in reflectance mode with small opening SAV: hard panned dragees, soft panned samples, hard panned chewing gum.

**L*-value**: The L*-axis describes the lightness of a color with values from 0 to 100 (0 = black, 100 = white).

**a*-value**: The a*-value describes the green- and red ratio of a color (neg. = green, pos. = red).

**b*-value**: The b*-value describes the blue- and yellow ratio of a color (neg. = blue, pos. = yellow).

**C-value**: Chroma describes the color intensity and brilliance of a color.

**h°-value**: Hue, the angle hue h° stands for the color shade in the color space.

The values L*a*b* allow for the calculation of the absolute distance in the color space delta "E2000" (ΔE2000). If ΔE2000-value is above 2 the human eye can detect a difference between two samples, is ΔE2000 below the value 2 there are usually acceptable color differences between two samples.

In one embodiment, the whitening, cloudifying or opacifying effect of the cellulose particle population in a food matrix of the disclosure or in a beverage matrix of the invention is measured by visual inspection as compared to a control without the cellulose particle population. Examples include different panned products, hard boiled candy, jelly gum, powdered soft drink, fruit preparation, plant-based meat type chicken are assessed by visual inspection.

### Opacifying agent and cloudifying agent

Opacifying agent and cloudifying agent means that the ingredient confers opacifying properties to a matrix, the matrix being food or beverage.

Opacifying or cloudifying properties mean an increased turbidity as compared to a matrix without the cellulose particle population as disclosed herein.

The Turbidity is measured with a Turbiquant 3000 IR in NTU (Nephelometric Turbidity Units) through the amount of light scattered at the detector. The more particles present, the greater the scattering effect.

In one embodiment, the cellulose particle population applied in the edible matrix of the invention has a covering effect. The covering effect can be assessed by visual assessment by comparing the coverage by a layer comprising the cellulose particle population with a layer without the cellulose particle population.

### Edible matrix

The edible matrix is a food or beverage product.

### Commercially available MCC

Within the context of the present invention, the term "MCC" refers to microcrystalline cellulose, as commercially available for use in food applications. It typically comprises more than 99% pure cellulose and is a white, odorless powder with a particle size generally ranging from approximately 20 to 200µm and a pH in aqueous suspension of approximately 5.0 to 7.5.

### Cellulose particle population

The cellulose particle population serves as whitening agents or as opacifying or cloudifying agents for food or beverage products.

The cellulose particle population of the present disclosure has the following dimensions:
▪ A D50 (by number) **length** of from 1000 to 10000 nm as measured by scanning electron microscope (SEM), preferably a Mira3 system (TESCAN) operated at 330 kV and a working distance of 5 mm and the application Image J;
▪ a D50 (by number) **width** of from 200 to 1000 nm, and preferably from 300 to 600 nm, and even more preferably from 459 to 550 nm as measured by scanning electron microscope (SEM), preferably a Mira3 system (TESCAN) operated at 330 kV and a working distance of 5 mm and the application Image J.

A D50 (by number) **mean average aspect ratio** of from 4 to 10 (calculated by dividing the D50 length by the D50 width of the particles)

### Mean average aspect ratio (D50)

There is a strong technical effect associated with the specific particle geometry of the cellulose particle population of the present disclosure.

The particles of the present disclosure through their mean average aspect ratio from 4 to 10 scatter the full spectrum of visible light. This leads to outstanding white light reflection and luminosity.

### Mean average width (D50)

The width is generally the shortest dimension of the particle when viewing a particle in plain view. For example, if the particle is rod-shaped, the width is the diameter of the cross-section of the rod. The width of the particle is typically the lateral diameter of the particle. The width may also be referred to as the diameter.

The number of measurements of width is typically from 100 to 1000. Generally, over 100 measurements of width are taken. The width is typically the mean average value of the measurements taken. By calculating the mean average value for the width, the effect of the anomalous values is reduced, and the representative width of the particle is indicated.

### Particle morphology

The particles are typically not spherical, as the mean average aspect ratio is greater than 1, for example, from 2 to 25, preferably from 2 to 18, preferably from 4 to 10. The particles are prismatic and/or elongate. Preferably the particles are rod-shaped.

The cellulose particles of the present disclosure are distinct from known cellulose nanomaterials, such as cellulose nanofibers and nanocrystals. The cellulose particle population of the present disclosure have a larger width and a smaller mean average aspect ratio than nanofibers and nanocrystals. The mean average aspect ratio of 4 to 10 optimizes the interaction with the wavelength of the visible spectrum of light. The improved size of the cellulose particle population of the present disclosure, the scattering performance is improved on the single scatter level.

### Manufacturing method of the cellulose particle population

The cellulose particles are obtainable by a method comprising:
▪ Hydrolyzing a cellulose material in the presence of 20 to 55 % (v/v) of a strong
mineral acid to provide hydrolyzed cellulose for 5 hours at 60°C;
▪ Washing the hydrolyzed cellulose particles;
▪ Fractioning the hydrolyzed cellulose particles, preferably by centrifugation; and
▪ Optionally drying the fractionated hydrolyzed cellulose particles, preferably by spray-drying.

A possible preparation method and a detailed characterization of the cellulose particle population are described in WO2023135261A1. WO2023135261A1 contains the description of two distinct cellulose particle populations in Example 1 and Example 2. The cellulose particle population of Example 1 is defined by a width of 520±151 nm, a length of 2706±767 nm and an average mean average aspect ratio of 5.2. The cellulose particle population of Example 1 was used in the present invention and will be referred to as Population 1. The cellulose particle population of Example 2 is defined by a width of 212±64 nm and a length of 1944±677 nm with an average mean average aspect ratio of 9.2. The cellulose particle population of Example 2 was also used in the present invention and will be referred to as Population 2.

### Scattering performance of the cellulose particle population

The cellulose particle population are distinct from known cellulose nanomaterials, such as cellulose nanofibers and cellulose nanocrystals. This optimizes the scattering performances on the single scatter level.

The cellulose particles are distinct from known cellulose nanomaterials, such as cellulose nanofibers and nanocrystals.

The cellulose particle population have a larger width and a smaller mean average aspect ratio than nanofibers and nanocrystals, to optimize the interaction with the wavelength of the visible spectrum of the light.

Once the correct lightness is obtained, the chroma and hue of the sample are recorded.

### BRIEF DESCRIPTION OF THE DRAWINGS

Figures 1 and 2 show the visual results of Example 3 - Panning syrup.
Figure 3 shows the visual results of Example 4.
Figure 4 shows the visual results of Example 5 - Water solution.
Figure 5 shows the visual results of Example 6 - Soft drink.
Figure 6 shows the visual results of Example 7 - Oat milk.
Figures 7 to 11 show the visual results of Example 8 - Hard panning.

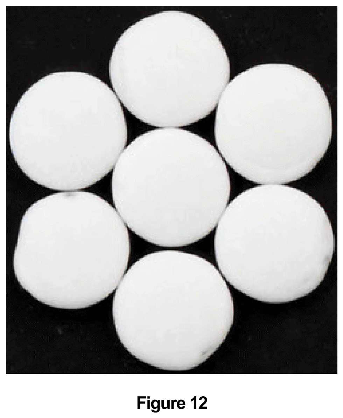

Figure 12 shows the visual results of Example 9 - Hard panning.
Figure 13 shows the visual results of Example 9 - Soft panning.
Figure 14 shows the visual results of Example 10 - Soft panning - licorice eggs.
Figure 15 shows the visual results of Example 11 - Hard panned chewing gum.
Figure 16 shows the visual results of Example 11 in function of the number of layers of Example 11 - Hard panned chewing gum.
Figure 17 shows the visual results of Example 12 - Hard boiled candy.
Figure 18 shows the visual results of Example 12 - Glycerine solution in Hard boiled candy.
Figure 19 shows the visual results of Example 13 - Jelly gum.
Figure 20 shows the cloudifying and whitening effect of Example 13 - Jelly gum.
Figure 21 shows the visual results of Example 14 -soft drink.
Figure 22 shows the visual results of Example 14 - Powdered soft drink
Figure 23 shows the visual results of Example 14 - Diet recipe of powdered soft drink
Figure 24 shows the visual results of Example 15 - Addition of stabilizers in powdered soft drink
Figure 25 shows the visual results of Example 15 - Neck of bottle of powdered soft drink.
Figure 26 shows the visual results of Example 15 - Turbidity in PSD at different temperatures
Figure 27 shows the visual results of Example 16 - Coffee creamer.
Figure 28 shows the visual results of Example 17 - Plant based milk.
Figure 29 shows the visual results of Example 18 - UHT treatment of oat milk.
Figure 30 shows the visual results of Example 18 - Visual - UHT treatment of oat milk.
Figure 31 shows the visual results of Example 20 - Fruit preparation.
Figure 32 shows the visual results of Example 21 - Bakery decoration.
Figure 33 shows the visual results of Example 22 - Buttercream frosting.
Figure 34 shows the visual results of Example 23 - Surimi.
Figure 35 shows the visual results of Example 24 - Plant based meat type chicken.
Figure 36 shows the visual results of Example 25 - Gravy before heating.
Figure 37 shows the visual results of Example 26 - Gravy after heating.
Figure 38 shows the two different jelly gum recipes of Example 26. A. No cellulose particle population. B. 3 w% cellulose particle population 3. C. No cellulose particle population. D. 3w% cellulose particle population 3. Figure 38 shows that the cellulose particle population of the present inventions give different background colors in the application jelly gum, Example 26.
Figure 39 shows the results of Example 27: Whitening of instant jelly dessert when using TiO2, calcium carbonate or stabilized formulation containing cellulose particle population 4. A. Uncolored. B. TiO2 0.1 w%. C. Calcium carbonate 2 w% without acid. D. Cellulose particle population 3 + xanthan + dried glucose syrup 5 w%.
Figure 40 shows the results of Example 28: White donut glazings. A. Before drying. B. After drying. 1. No color. 2. 1.6 w% calciumcarbonate. 3. 1.6 w% cellulose particle population 3.

### EXAMPLES

### Example 1:

1g of cellulose microcrystalline powder was hydrolyzed with sulfuric acid at 50 °C for five hours, after which the reaction was quenched by adding 300 mL of milli-Q water. The acid supernatant was removed via centrifugation. The hydrolyzed cellulose particles were then dispersed in 100 mL of milli-Q water and centrifuged again. This washing process was repeated three times to eliminate most of the acid. The resulting suspension was centrifuged at 2000 rpm for five minutes, and the supernatant was subsequently collected and centrifuged again at 3000 rpm for five minutes.

### Example 2:

1g of cellulose microcrystalline powder was hydrolyzed with sulfuric acid at 60 °C for five hours, after which the reaction was quenched by adding 300 mL of milli-Q water. The acid supernatant was removed via centrifugation. The hydrolyzed cellulose particles were then dispersed in 100 mL of milli-Q water and centrifuged again. This washing process was repeated three times to eliminate most of the acid. The resulting suspension was centrifuged at 2000 rpm for five minutes, and the supernatant was subsequently collected and centrifuged again at 3000 rpm for five minutes.

### Example 3: Panning syrup

The cellulose particle population of Population 1 was added to panning syrup.

**Method:** 66 brix sugar syrup, color added only with stirring. No heat and no high sheer mixing applied for dissolution of color.

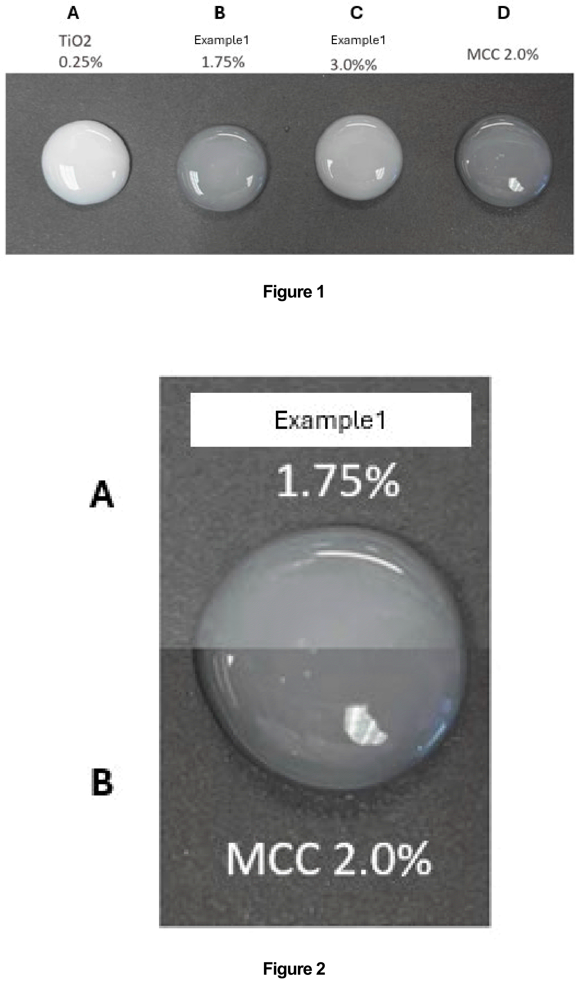

The results are shown in Figures 1 and 2.

The cellulose particle population of Population 1 at a concentration of 1.75 w% gives a better whitening effect than MCC at a concentration of 2 w% in panning syrup.

### Example 4 - Panning syrup - Viscosity:

When mixing CMC into panning syrup, the viscosity increased drastically. The panning syrup was not usable anymore after this increase in viscosity.

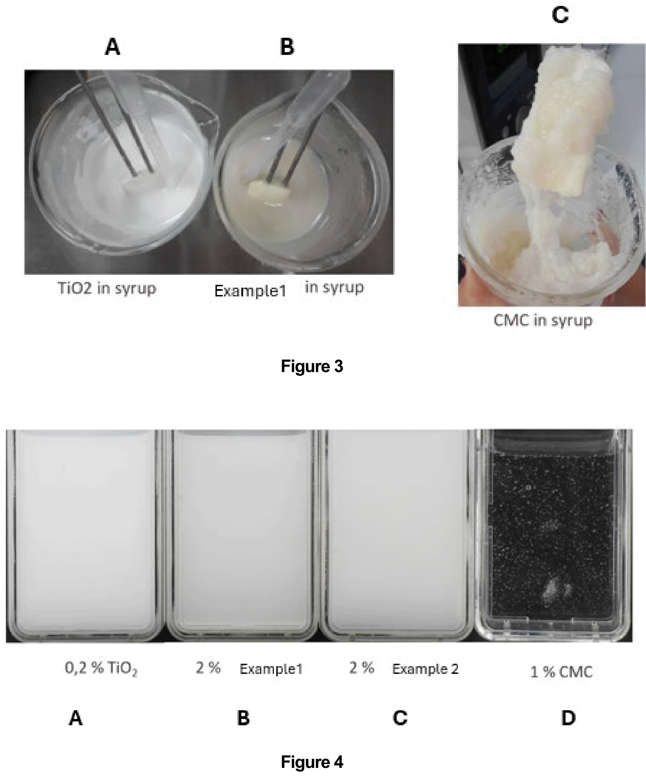

The cellulose particle population of Population 1 increases the viscosity of the panning syrup only slightly. The syrup can still be processed and applied without issues. The results are shown in Figure 3.

### Example 5 - Water solution:

The cellulose particle population of Population 1 showed a clear and strongly visible whitening effect in water. CMC is very difficult to disperse and becomes gelled. Moreover, there is no whitening effect for CMC, see Figure 4:

Figure 4A: titanium dioxide at 0.2 w%

Figure 4B: Cellulose particle population of Population 1, sample 1 at 2 w%

Figure 4C: Cellulose particle population of Population 2, sample 2 at 2 w%

### Example 6 - soft drink:

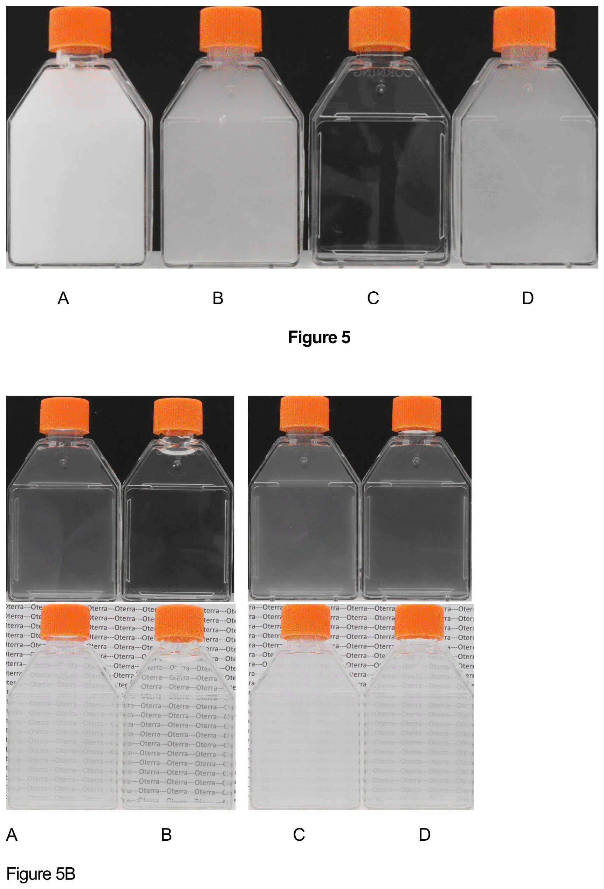

The cellulose particle population 2 was tested against a standard CMC and a standard MCC in standard soft drink recipe. The result can be seen in Figure 5A.

Figure 5A: 0.18 w% TiO2 in soft drink

Figure 5B: 1.0 w% cellulose particle population 2 in soft drink

Figure 5C: 1.0 w% CMC in soft drink

Figure 5D: 1.0 w% MCC in soft drink

### Recipe used

▪ Sugar 86.00 g/L ▪ Citric acid (crystallin) 1.20 g/L ▪ K-sorbate (powder) 0.18 g/L ▪ Na-benzoate (powder) 0.14 g/L ▪ Demineralized water Qsp 1L ▪ Brix = 11°Bx / pH = 3.0

Turbidity measurement is performed using a Turbiquant 30001R.

TiO2 is very white and opaque in soft drink. The turbidimeter was not able to read its turbidity.

The cellulose powder of population 2 is also opaque in soft drink, but less than TiO2 and it is not as white as TiO2, it is more greyish-white. The turbidity measured in NTU is significantly higher than the turbidity for the microcrystalline cellulose (MCC). The sample with MCC is visible less white than the sample with cellulose particles of population 2 and also gives less turbidity (correlated to the lower NTU of MCC compared to cellulose particle of population2).

The carboxymethylcellulose (CMC), once fully dispersed, was completely transparent and gives no turbidity at all.
0.188 g/L TiO2: white - Turbidity not possible to be measured
1.0 g/L of cellulose particle population 2: greyish white - 1000 NTU
1.0 g/L of CMC: transparent - 7 NTU
1.0 g/L MCC: greyish white - 650 NTU

The cellulose particle population 2 was compared to a commercially available MCC and tested with different dosages and dilutions to further check on NTU values, this can be seen in Figure 5B.

| Sample | A: Cellulose Particle Population 2 | B: MCC | C: Cellulose Particle Population 2 | D: MCC |
|---|---|---|---|---|
| Dosage (g/L) | 0.05 | 0.05 | 0.10 | 0.10 |
| NTU | 47 | 13 | 86 | 63 |

### Example 7 - Oat milk:

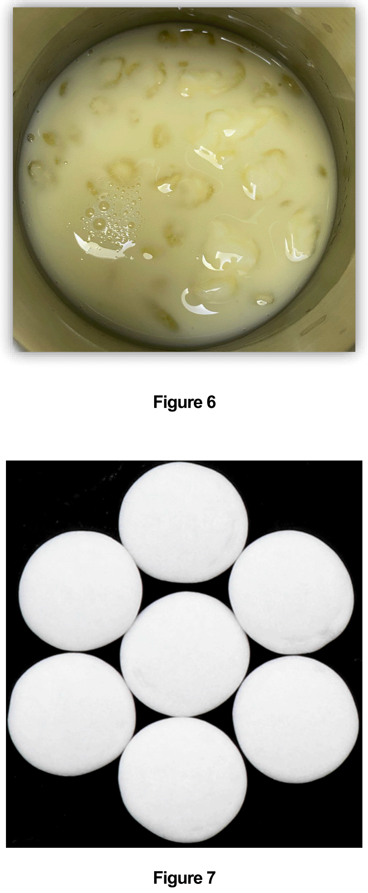

CMC cannot be used at all in oat milk, as it creates gel lumps, as shown in Figure 6.

Alpro oat milk (ALPRO AVOINE SANS SUCRES)
base d'avoine (97%) (eau, avoine (8.3%)), fibre soluble de maïs, huile de toumesol, calcium (carbonate de calcium), sel marin de table, stabilisant (gomme gellane), vitamines B2, B12, D2)
CMC used with 1.0%

### Example 8 - Hard panning:

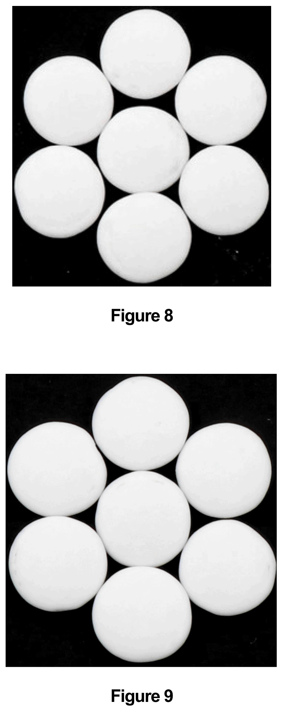

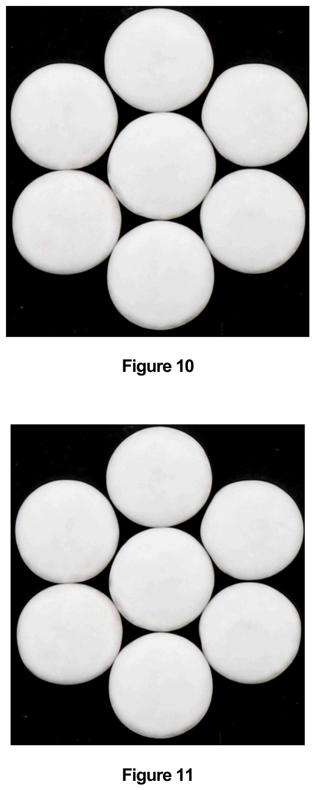

The following hard panning examples and comparative examples are evaluated by visible inspection:
▪ Figure 7: Cellulose particle population of Population 2 at a concentration of 7 w% in the syrup
▪ Figure 8: Cellulose particle population of Population 2 at a concentration of 3,5 w% in the syrup
▪ Figure 9: TiO2 at a concentration of 1.0 w% in the syrup
▪ Figure 10: rice starch a concentration of 10 w% in the syrup
▪ Figure 11: Calcium carbonate at a concentration of 10 w% in the syrup.

### The mentioned dosages are the dosages in the pure panning syrup.

The cellulose particle population of Population 2 has a very good covering and whitening ability for hard panned chocolate lentils. With 7 w% of the cellulose particle population of Population 2, a better whitening effect than TiO2 is achieved. When the cellulose particle population of Population 2 is dosed at 3.5 w% it has a similar whitening effect than TiO2 at 1.0 w%. In addition, the cellulose particle population of Population 2 has a better whitening effect than rice starch and Calcium Carbonate. Following ingredients are used to prepare the panning syrup:

### Ingredients

| **Syrup** | | | **Grams** | % |
|---|---|---|---|---|
| | - Sucrose | | 350 g | 70 |
| | - Tap water | | 150 g | 30 |
| | | **Total** | 500 g | 100 |

### Procedure

### Syrup:

▪ Tare balance with the pot and a spoon
   Add and mix all the ingredients in the pot and heat until all the ingredients are completely dissolved
▪ Add water to 500 g to the pot to regain brix level (e.g. weight after cooking = 460 g → add 40 g water)
   ∘ Measure brix level, 70.0 ± 0.5
   ∘ The brix level can be adjusted by either adding water or further cooking
▪ Cool down to room temperature

### Panning:

▪ Weigh colors in beakers, add the syrup and mix well
▪ Put white centers into the pan
   ∘ Small pan (capacity: 300 - 500 g centers): 1.5 - 2 mL syrup
   ∘ Large pan (capacity: 700 - 2000 g centers): 3 - 5 mL syrup
▪ Apply the syrup until all centers are wet
▪ Let the centers dry between each layer. (Use hairdryer if centers stick to the side)
   o Numbers of layers for white panning: Gain weight for white trials: ≈ 45 % gain weight (30 % colored syrup + 15 % uncolored syrup)

As the white layer serves as a layer under a colored layer, it is not necessary to perform the polishing step.

### Example 9 - Soft panning - Jellybean:

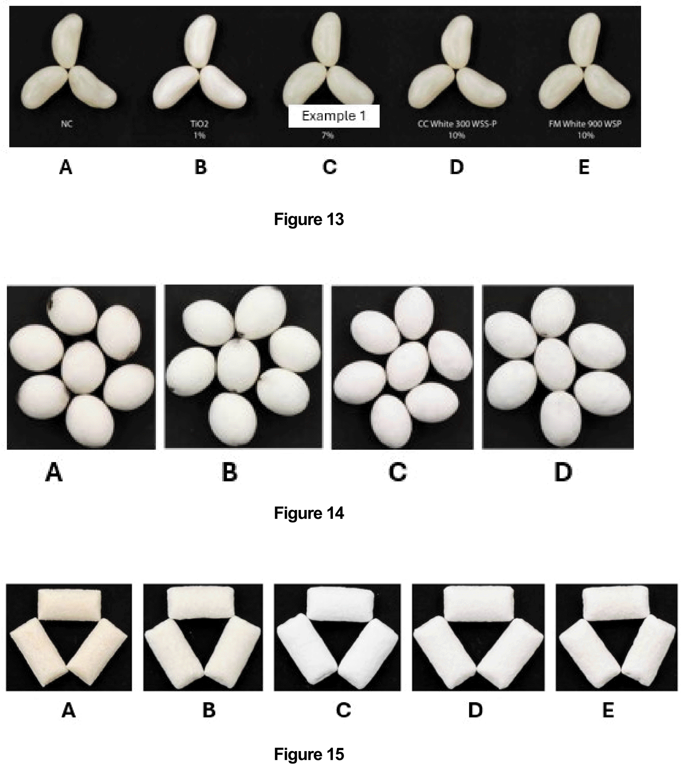

The following soft panning examples and comparative examples are evaluated by visible inspection, see Figure 13: from left to right:
▪ Figure 13A: no whitening agent added,
▪ Figure 13B: TiO2 at a concentration of 1 w% in the syrup,
▪ Figure 13C: Cellulose particles of Population 2 at a concentration of 7 w% in the syrup,
▪ Figure 13D: CaCO3 at a concentration of 7 w% in the syrup, and
▪ Figure 13E: Rice starch at a concentration of 10 w% in the syrup.

### Recipe soft panning

| **Syrup** | | **Grams** | **%** |
|---|---|---|---|
| | - Glucose syrup | 800 g | 80 |
| | - Tap water | 200 g | 20 |
| **Total** | | **1000 g** | **100** |
| | | | |

| **Syrup for wetting** | | | |
|---|---|---|---|
| | **- Sucrose** | 320 g | 64 |
| | **- Tap water** | 180 g | 36 |
| **Total** | | 500 g | 100 |

### Other ingredients

- Color
- Castor sugar
- Icing sugar

| **Standard panning** | | Layers |
|---|---|---|
| | - Syrup | 3 |
| | - Castor sugar | 2 |
| | - Icing sugar | 1 |

### Procedure soft panning

**Syrup:**
   - Tare balance with the pot and a spoon. Add and mix all the ingredients in the pot and heat until all the ingredients are completely dissolved
   - Add water to 1000 g to the pot to regain brix level (e.g. weight after cooking = 960 g → add 40 g water)
Measure brix level, 65.0 ± 0.5
The brix level can be adjusted by either adding water or further cooking
   - Cool down to room temperature
**Panning:**
   - Follow and fill out template for soft panning
   - Weigh colors in beakers, add the syrup and mix well (Note: Info regarding addition of color)
   - Put centers into the pan
Small pan (capacity: 300 - 500 g centers): 1.5 - 2 mL syrup
Large pan (capacity: 700 - 2000 g centers): 3 - 5 mL syrup
   - Apply the syrup until all centers are wet
   - Add castor sugar and let the centers start to dry

When the centers look wet (the sugar crystals are dissolved), more castor sugar is added. This continuous with reduced amount of sugar until centers do not get wet or sugar crystals are observed in the pan
- Let the centers dry for approx. 20 minutes
- Add another layer of syrup and follow above mentioned procedure
- The number of layers depends on product and procedure
- The final layer of syrup should be dried with icing sugar to smooth the product surface
- Leave the product dusty with icing sugar for 24 hours before polishing

As the white layer serves as a layer under a colored layer, there is no need to perform polishing.

### Syrup for wetting:

- Tare balance with the pot and a spoon. Add and mix all the ingredients in the pot and heat until all the ingredients are completely dissolved
- Add water to 500 g to the pot to regain brix level (e.g. weight after cooking = 460 g → add 40 g water)
Measure brix level, 70.0 ± 0.5

The brix level can be adjusted by either adding water or further cooking
- Cool down to room temperature

### Storage:

Store the dragees in zipper bags at room temperature.

### Results:

**Table 1:**

| **Sample** | **L*** | **a*** | **b*** | **C*** | **h°** | **ΔE00** |
|---|---|---|---|---|---|---|
| **TiO2 - 1 w%** | 78.13 | -1.51 | -0.1 | 1.52 | 183.74 | |
| **Cellulose particle population of Population 2 - 7 w%** | 56.71 | -1.17 | 1.33 | 1.77 | 131.21 | 17.16 |
| **Calcium carbonate 10 w%** | 59.07 | -1.34 | 0.83 | 1.57 | 148.06 | 15.02 |
| **Rice search 10 w%** | 57.9 | -1.1 | 1.23 | 1.65 | 131.77 | 16.08 |

**Table 2:**

| **Sample** | **L*** | **a*** | **b*** | **C*** | **h°** | **ΔE00** |
|---|---|---|---|---|---|---|
| **uncolored** | 54.86 | -1.18 | 1.66 | 2.04 | 125.46 | |
| **TiO2 1 w%** | 78.13 | -1.51 | -0.1 | 1.52 | 183.74 | 18.86 |
| **Cellulose particle population of Population 2 - 7 w%** | 56.71 | -1.17 | 1.33 | 1.77 | 131.21 | 1.75 |
| **Calcium carbonate 10 w%** | 59.07 | -1.34 | 0.83 | 1.57 | 148.06 | 15.02 |
| **Rice starch 10 w%** | 57.9 | -1.1 | 1.23 | 1.65 | 131.77 | 2.85 |

### Conclusion soft panning jellybeans

The cellulose particle population of Population 2, CapColors^{®} White 300 WSS-P commercially available from the applicant (Calcium carbonate) and FruitMax^{®} White 900 WSP commercially available from the Applicant (rice starch) have not the same ability as TiO2 to cover jellybeans in white.

With dosages used to match TiO2 in classic hard panning dragees, the results are less white in jellybeans and less covering. This is also underlined with the according color measurement values.

Population 2, CapColors^{®} White 300 WSS-P (Calcium carbonate) and FruitMax^{®} White 900 WSP (rice starch) are closer to a control product without any opacifying agent than the TiO2 sample.

The cellulose particle population of Population 2 gives close results to CapColors^{®} White 300 WSS-P and FruitMax^{®} White 900 WSP. A further increase of the dosage potentially increases the covering and whitening of the jellybeans.

### Example 10: Soft panning licorice eggs

The results of the soft panning licorice eggs in shown in Figure 14 by visual inspection:
▪ Figure 14A: without opacifying or whitening agent
▪ Figure 14B: TiO2 at a concentration of 1 w% as compared to the total weight of the panning syrup
▪ Figure 14C: Cellulose particles of Population 2 at a concentration of 3.5 w% as compared to the total weight of the panning syrup
▪ Figure 14D: Capcolors^{®} White 300 WSP at a concentration of 10 w% as compared to the total weight of the panning syrup

### Panning syrup

- White mass, received from Haribo
- **Centers**
- Liquorice eggs

### Colors

- Titanium dioxide, powder
- FruitMax^{®} White 300 WSS-P, powder
- The cellulose particle population of Population 2 in powder form

### Process

- 6 layers of syrup
- Syrup at 50 °C

**Table 3:**

| **Name** | **L*** | **a*** | **b*** | **C*** | **h°** | **ΔE00** |
|---|---|---|---|---|---|---|
| **uncolored** | **86,39** | **0,31** | **7,24** | **7,25** | **87,58** | |
| **The cellulose particle population of Population 2** | 87,587 | -0,01 | 4,36 | 4,36 | 90,127 | 2,447 |
| **TiO2** | 89,529 | 0,176 | 6,531 | 6,534 | 88,456 | 2,083 |
| **White 300** | 86,743 | 0,092 | 4,708 | 4,709 | 88,885 | 2,027 |

All samples are close in shade. Visually the TiO2 seems to be brighter than the others (highest L*-value). The cellulose particle population of Population 2 is brighter than CapColors^{®} White 300 WSS-P (higher L*-value of the cellulose particle population of Population 2 than sample panned with Calcium carbonate), slightly lighter and brighter than the uncolored sample and less light and duller than the TiO2 panned sample (lower L*-value of the cellulose particle population of Population 2 compared to TiO2). Good results are obtained for the whitening effect in soft panning licorice eggs of the cellulose particle population of Population 2.

### Example 11 - Hard panned chewing gum:

The results of Example 11 are shown in Figure 15:
▪ Figure 15A: Gum base without syrup
▪ Figure 15B: Syrup without whitening or opacifying agent
▪ Figure 15C: TiO2 at a concentration of 1 w% of the syrup
▪ Figure 15D: Calcium carbonate at a concentration of 10 w% of the syrup
▪ Figure 15E: Cellulose particle population of Population 2 at a concentration of 10 w% of the syrup

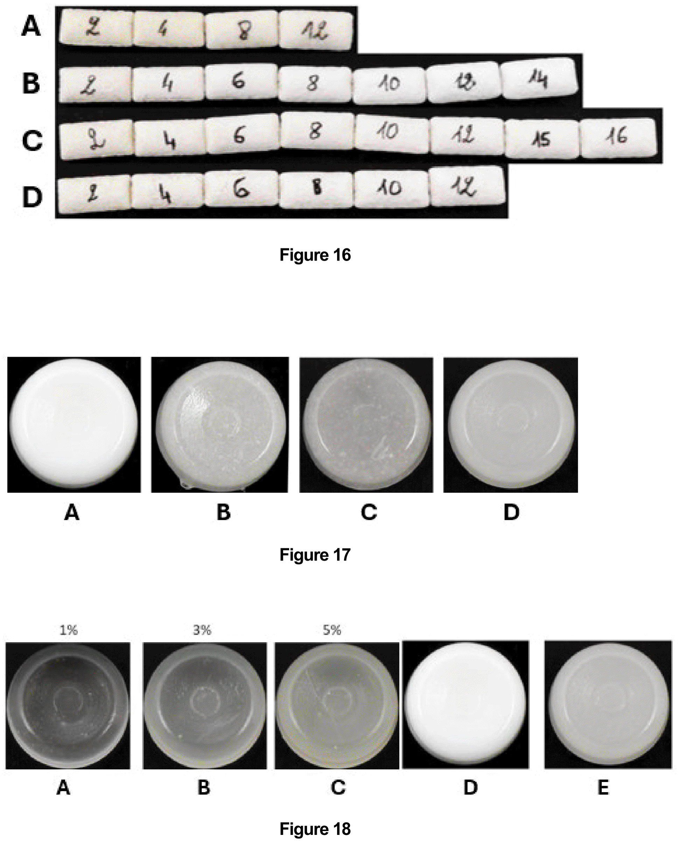

### Figure 16 shows the results in function of the number of layers:

▪ Figure 16A: Gum base without syrup
▪ Figure 16B: TiO2 at a concentration of 1 w% of the syrup
▪ Figure 16C: Calcium carbonate at a concentration of 10 w% of the syrup
▪ Figure 16D: Cellulose particle population of Population 2 at a concentration of 10 w% of the syrup

The number on the gum indicates the number of panning layers.

| **Syrup** | | |
|---|---|---|
| | - Xylitol 300 | 340 g |
| | - Tap water | 120 g |
| | - Gum arabic suspension (1:1) in tap water | 40 g |
| | (Material no. 601364) | |

| Other ingredients (not relevant for white hard panned chewing gum trials) | | |
|---|---|---|
| | - Color | |
| | Polishing with wax or shellac | |
| | - Capol^{®} 1400 | |
| | - Capol^{®} 425M | |

### Panning:

| | |
|---|---|
| - Chewing gum centers | 750 g |
| - Colored syrup per batch | 350 g |
| - Large pan | |

### Syrup:

▪ Mix gum arabic and water to form a suspension
▪ Weigh Xylitol 300 and water in a pot. Heat until dissolved
▪ Mix the gum arabic suspension into the solution of Xylisorb 300
▪ Adjust the brix to 72° in the panning solution by adding water to a total amount of 500 g. pH in uncolored syrup is around 5

### Panning

▪ Mix color into the syrup and keep it in Blue Cap bottles at 70-75° C in a water bath
▪ Put 750 g chewing gum centers in the large pan with baffers
▪ Apply syrup. Start with 8 ml per layer that the full surface is wetted. Increase applied syrup every 2-3 layers for about 1 ml
▪ When the syrup is distributed evenly on the centers, apply cold air. Continue this procedure for all layers till gain weight of 50% is reached. Be aware that the chewing gum centers will stick to the side of the pan, remove pieces from the side during panning.
▪ Ensure proper drying of the centers during panning. When centers are not sufficiently dry, the applied syrup will melt the layers below and will create "washed comers".

### Polishing with wax powder:

▪ Add a small amount of powder wax, Capol^{®} 1400 to the colored chewing gum (keep the gum in the pan used for the coating, not necessary to clean it)
▪ Hot air is applied, when the wax is distributed on the gum, and it starts to get shiny. More wax powder can be necessary to apply
▪ Capol^{®} 425M (Shellac) is applied in small amount to remove small wax particles and get a better shine, turn the pan on slow speed after Shellac addition
▪ Empty the pan onto trays, and the product can be packed shortly after

**Storage:** Store the dragees in zipper bags at room temperature.

**Table 4: Color measurement values for hard panned chewing gum:**

| **Name** | **L*** | **C*** | **h°** | **ΔE00** |
|---|---|---|---|---|
| TiO2 1 w% | 91.94 | 1.99 | 93.40 | |
| No whitening agent added | 87.37 | 6.06 | 90.39 | 4.49 |
| The cellulose particle population of Population 2 at 7 w% | 90.50 | 3.83 | 90.03 | 1.86 |
| CC W 300 10 w% | 90.31 | 4.07 | 87.93 | 2.12 |

TiO2 gives the highest whitening effect when used in sugar free hard panned chewing gum application. This can be seen on the L*-value (the higher the L*-value, the lighter and whiter a sample) which is highest of all samples. Also, both the cellulose particle population of Population 2 as well as CaCO3 show a whitening effect as L*-value is clearly higher than for uncolored syrup.

The cellulose particle population of Population 2 reaches the same whitening effect than CaCO3 but with a 30 w% lower dosage.

### Example 12 - Hard boiled candy:

Assessment of the whitening effect by visual inspection of the images shown in Figure 17:
▪ Figure 17A: TiO2 in a concentration of 0.25 w% in final hard candy
▪ Figure 17B: Cellulose particle population of Population 1, sample 1 in a concentration of 1.5 w% in final hard candy
▪ Figure 17C: Cellulose particle population of Population 1, sample 2 in a concentration of 1.5 w% in final hard candy
▪ Figure 17D: CapColors^{®} White 300 WSP in a concentration of 1 w% as in final hard candy

### Recipe

| Ingredient | Grams (total 406g) | % |
|---|---|---|
| Isomalt⁽¹⁾ | 300 | 73.98 |
| Tap water | 100 | 24.63 |
| Citric acid (50% solution) | 6.0 | 1.48 |

### Other ingredients

- Color
- (Flavor)

*⁽¹⁾ Isomalt STM, Palatinit*

### Procedure

▪ Mix Isomalt and water in a pot and heat to 135 °C
▪ Add acid and boil to 165 °C
▪ Let the mass cool down to 130 °C before adding color into the pot. Weigh the color on a white plastic watch glass and add it into the pot. Gently stir until a homogeneous colored mass is reached
▪ The theoretical yield is 300g

### Molded candy:

Pour the candy mass into the metal molds using a teaspoon. Allow setting and cooling before removing the candies from the molds.

### Storage:

The finished product should be stored in a zipper bag immediately after hardening.

### Glycerine solution:

A solution of glycerine and the cellulose particle population of Population 2 were tested in hard boiled candy application. A pre-solution of powdered particles in glycerine can significantly improve the usability in hard candy. The results are shown in Figure 18:
▪ Figure 18A: The cellulose particle population of Population 2 at a concentration of 1 w% in final hard candy.
▪ Figure 18B: The cellulose particle population of Population 2 at a concentration of 3 w% in final hard candy.
▪ Figure 18C: The cellulose particle population of Population 2 at a concentration of 5 w%. in final hard candy.
▪ Figure 18D: TiO2 at a concentration of 0.25 w% in final hard candy.
▪ Figure 18E: The cellulose particle population of Population 2 at a concentration of 1 w% in final hard candy.

In Hard-Boiled Candy there is more a cloudy effect than a whitening effect when using the cellulose particle population of Population 1. Calcium carbonate appears white because it reacts with the citric acid, forming CO2. The glycerine solution with the cellulose particle population of Population 2 is not totally dispersed in the final hard candy with the classic method of addition of colour in the hot hard candy mass. A dilution of colour in cold water at the beginning of the process helps to disperse totally the white product in the hard candy. The glycerine solution cellulose particle population of Population 2 give a cloudy effect, more and more intense with an increase of dosage. At 5 %, it is not as opaque as TiO2.

### Example 13 - Jelly gum:

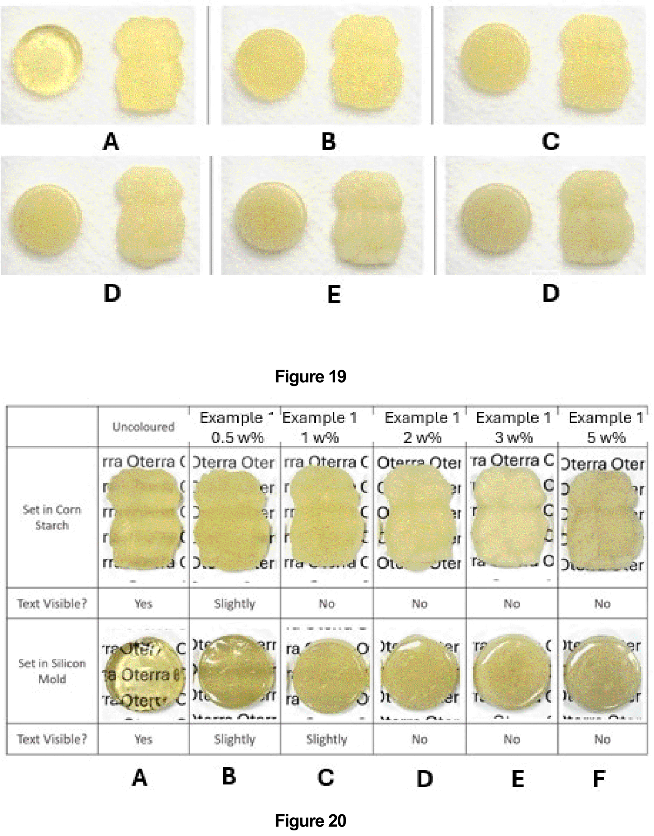

The results of example 13 are shown in Figure 19 - assessment by visual inspection displayed on a written background to display effect of cloudiness:
▪ Figure 19A: Control - No whitening agent added
▪ Figure 19B: Cellulose particle population of Population 2 at 0.5 w%
▪ Figure 19C: Cellulose particle population of Population 2 at 1 w%
▪ Figure 19D: Cellulose particle population of Population 2 at 2 w%
▪ Figure 19E: Cellulose particle population of Population 2 at 3 w%
▪ Figure 19F: Cellulose particle population of Population 2 at 5 w%

The cellulose particle population of Population 2 is suitable to be used as a cloudifying or whitening agent in jelly gum. The cloudiness increased as the dose increased. However, at 5%, the jelly gum appeared greyer and duller than with 3%. Gummies containing the cellulose particle population of Population 2 at 2% or more, set in either silicon mold or com starch, were fully opaque. The cellulose particle population of Population 2 reduces the springiness of the gummies as the dose increased, but even at 5%, the texture is still considered springy when pressed. The recommended maximum dose of cellulose particle population of Population 2 in jelly gum is 3%.

### Jelly gum composition:

| **Component** | **Ingredient** | **%** |
|---|---|---|
| Gelatine | Gelatine 170 Bloom | 7.19 |
| | Water | 13.53 |
| Sugar Mix | Sugar | 25.14 |
| | Glucose Syrup | 38.67 |
| | Water | 15.47 |
| **Total** | | **100.00** |
| Acid | Citric Acid 50% Solution | 2%* |
| Colour | The cellulose particle population of 0.5%, 1%, 2%, 3%, 5% Population 2 | |

### Method:

1. Add deionized water at ~40 °C in a bowl and slowly pour gelatin onto the surface until an even layer forms. Stir in as gently as possible. Do not pour more gelatin until it is soaked. Repeat the hydration of gelatin until all gelatin is soaked
2. Stir gently without dragging air into the liquid to dissolve the gelatin. Occasionally warm up the gelatin mix in a water bath to ensure proper dissolution
3. Weigh glucose syrup, sugar and water in a clean and dry pan
4. Place a thermometer probe in the mixture and heat at medium heat till 117 °C
5. Remove from heat and cool to 90 °C
6. Add the gelatin mixture in and stir gently with a silicon spatula to avoid dragging air into the mixture
7. Pour the jelly gum mass into beakers and place them in a water bath at 60 °C. Use aluminum foil to cover the opening of each beaker
8. Working on one beaker at a time, add the colours to the jelly gum mass. Mix until even.
9. Add the citric acid solution and mix evenly
10. Cover the beaker with aluminum foil and leave in the water bath for a few minutes for the air bubbles to escape
11. Repeat the process with the other colours
12. Before molding, scrape off the foam on the surface
13. Pour the jelly gum into corn starch molds and cover thoroughly with com starch. Let it dry for approx. 48h
14. Remove jelly gum from the starch and clean off as much starch as possible
15. Coat the entire surface of each jelly gum with polish, either by shaking in a bag or painting onto the jelly gum. If too much polish is added, wipe off with tissue
16. Pack and seal the jelly gum in bags when finished

### Dispersibility

The colour was able to directly disperse in the jelly gum, though more time was required for the higher dose of 3% and above.

### Texture

The jelly mass became more viscous at 3% and 5%.

Springiness (when pressed) of gummy decreases as the dose increases, but texture of gummy with 5 w% of the cellulose particle population of Population 2 is still considered springy. Only the texture of gummy with 0.5 w% of the cellulose particle population of Population 2 felt similar to control.

### Cloudifying and Whitening

Cloudifying and whitening effect was seen from 0.5 w% of the cellulose particle population of Population 2, see Figure 20. Cloudiness increased as the dose increased.

However, at 5 w%, the gummy appeared greyer and duller than 3 w%
When the silicon mold-set gummies were placed on a paper with text, 0.5 w% and 1 w% of the cellulose particle population of Population 2 appears to be somewhat translucent. However, when the com starch-set gummies were tested, only 0.5 w% of the cellulose particle population of Population 2 is somewhat translucent, see Figure 20.

### Example 14 - Powdered soft drink:

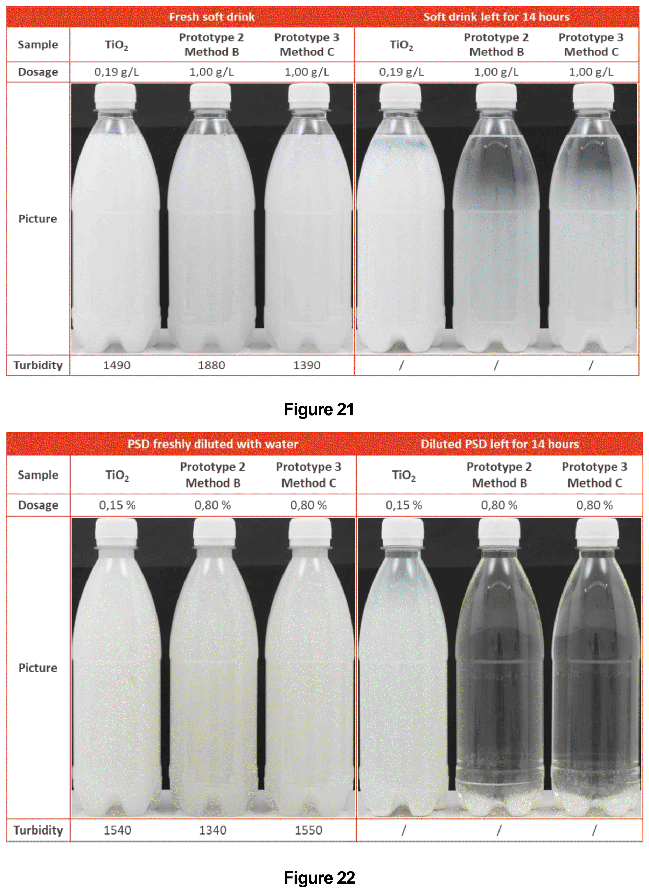

Assessment of the whitening effect by visual inspection as shown in Figure 21: Comparison of TiO2 vs. Population 1 and Population 2 in soft drink. Evaluation of freshly prepared soft drink and after standing time of 14 hours.

TiO2 shows an easy dispersion with water in a freshly prepared soft drink. There are no big particles visible, and a high opacity level is reached. After 14 hours there is a slight dephasing and a slight sedimentation visible.

Both cellulose particle populations show the same tendencies. These are a good dispersion / solubilization, no big particle visible and turbidity level equivalent to TiO2. After 14 hours a partly sedimentation is visible, leading to dephasing aspect.

TiO₂ is easy to disperse with water, no big particles are visible. After 14 hours standing time there is a loss of turbidity with significant sedimentation (linked to PSD process).

Both samples show the same tendencies. These are:
In the freshly prepared RTD there is a good dispersion, no big particles are visible, and turbidity close to TiO₂ is reached. After 14 hours of standing time a complete loss of turbidity with massive sedimentation is visible.

The assessment in powdered soft drink without Tricalcium phosphate (TCP) are shown in Figure 21. Evaluation of freshly prepared and after standing time of 14 hours.

In the freshly prepared drink TiO2 shows an easy dispersion with water, no big particles are visible and there is no big difference between PSD with and without Tricalcium phosphate.

After 14 hours a loss of turbidity with significant sedimentation (but less obvious than PSD with TCP) is observed.

The cellulose particle population of Population 1 and 2 freshly prepared show a good dispersion, no big particles and a turbidity close to TiO2 (no difference with and without Tricalcium phosphate). After 14 hours a complete loss of turbidity with massive sedimentation (same as PSD with TCP) is observed.

In general, Tricalcium phosphate is increasing slightly the sedimentation speed, visible with TiO2 but not with the cellulose particle population of Population 1 and 2. The cellulose particle population of Population 1 and 2 is sensitive to sedimentation over time, whatever the PSD contains TCP or not.

3 different sugar levels were tested in powdered soft drink (full sugar, mid-calory, diet recipe), see table below. Note: Due to the different sugar levels the base has a different background color. The results are shown in Figure 22.

Both TiO2 as well as the cellulose particle population of Population 2 show the same sedimentation after 24 hours in a mid-calory PSD recipe. Flocs are visible in all samples due to potential interaction / poor solubility of xanthan gum.

| **Powder soft drink** | **Full sugar recipe** | **Mid-calory recipe** | **Diet recipe** |
|---|---|---|---|
| **Ingredients (for 100g)** | 93.10g Brazilian cane sugar | 81.76g Crystal beet sugar | 50.00g Citric acid |
| | | | 43.28g Maltodextrin |
| | 5.00g of Icing sugar | 13.60g Citric acid | 5.00g Tri-sodium citrate |
| | 1.60g Citric acid | 3.00g Tri-sodium citrate | |
| | 0.30g Tri-calcium phosphate | | 0.80g Xanthan gum |
| | | 0.80g Xanthan gum | 0.80g Tri-calcium phosphate |
| | | 0.80g Tri-calcium phosphate | |
| | | 0.03g Aspartame | 0.09g Aspartame |
| | | 0.01g Acesulfame-K | 0.03g Acesulfame-K |
| **Process** | Color(s) applied in 300g of uncolored base Mixing in Thermomix^{®} at speed 4 for 2 minutes 30 seconds | | Color(s) applied in 10g of uncolored base and then diluted with tap water qsp 1L |
| **Reconstituted Ready-to-Drink** | 125g of colored base + tap water qsp1L | 25g of colored base + tap water qsp 1L | 10g of colored base + tap water qsp 1L |
| | Mixing time = 10 minutes at 550rpm with magnetic stirrer | | |

| **Sample** | **Batch number** | **Dosage in RTD (g/L)** | **Dosage in PSD Full sugar (% w/w)** | **Dosage in PSD Mid-calory (% w/w)** | **Dosage in PSD Diet (% w/w)** |
|---|---|---|---|---|---|
| Titanium dioxide WCD 3328 (K1) | 5705115 | 0.19 | 0.15 | 0.75 | 1.88 |
| Population 2, sample 1 | Method C 402-06-005 | 1.00 | 0.80 | 4.00 | 10.00 |
| Population 2, sample 2 | BPR24068A | 1.00 | 0.80 | 4.00 | 10.00 |

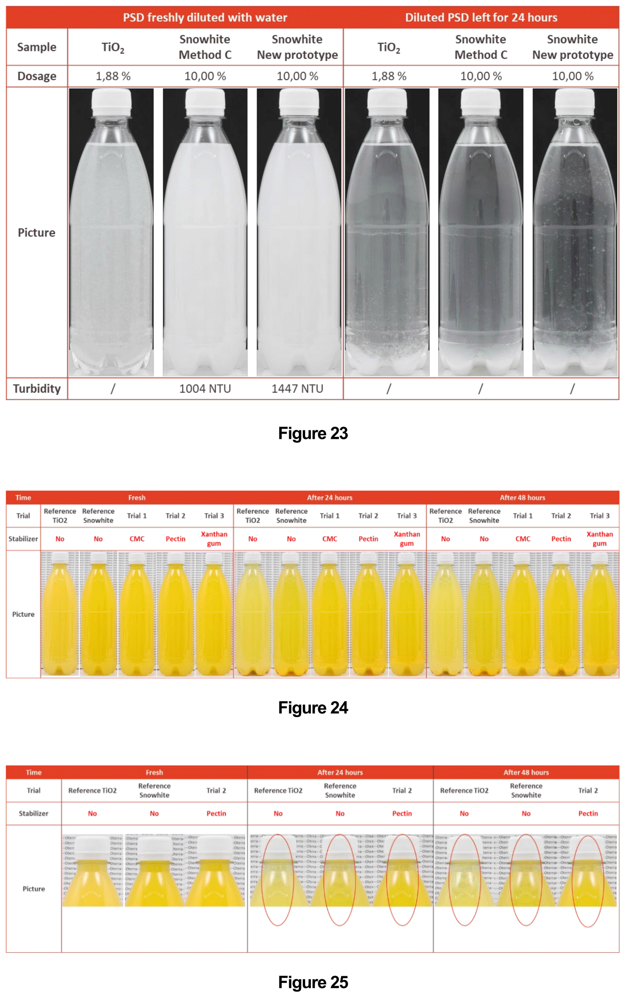

Results in soft drink (diet) are shown in Figure 23. In a diet recipe both TiO2 as well as the cellulose particle population of Population 2 are sensitive towards a massive sedimentation after 24 hours. Flocs are visible in all samples due to potential interaction / poor solubility of xanthan gum.

TiO2 is showing an unexpected behavior right after dilution with insoluble flocs which are leading to massive sedimentation within 24 hours. In a diet recipe the cellulose particle population of Population 2 shows - freshly prepared - a much better usability than TiO2.

### Example 15 - Addition of stabilizers to reduce sedimentation

### Addition of stabilizers to reduce sedimentation

It was checked how the addition of different stabilizers is influencing the sedimentation of the cellulose particle population of Population 2

### Recipe

- Standard Oterra PSD base : (Brazilian sugar, Icing sugar, Citric acid, Tri-Calcium Phosphate).
- Reconstituted Ready To Drink : 12% PSD + 88% Tap water

Below table shows the used stabilizers for this study.

| **Type** | **Name** | **Dosage** |
|---|---|---|
| **Cellulose gum** | CMC | 0.5 g/L |
| **Citrus pectin** | Pectin | 1 g/L |
| **Xanthan gum** | Xanthan gum | 0.5 g/L |

| **Trial** | **Reference TiO2** | **Population 2** | **Trial 1** | **Trial 2** | **Trial 3** |
|---|---|---|---|---|---|
| **Brix** | 11°Bx | 11°Bx | 11°Bx | 11°Bx | 11°Bx |
| **pH** | 3.0 | 3.0 | 3.0 | 3.0 | 3.0 |
| **Water** | Tap | Tap | Tap | Tap | Tap |
| **Acid** | Citric acid | Citric acid | Citric acid | Citric acid | Citric acid |
| **Sugar** | Cane sugar | Cane sugar | Cane sugar | Cane sugar | Cane sugar |
| **Color: CapColors^{®} T-15-WSS-P-500** | 0.13 g/L | 0,13 g/L | 0.13 g/L | 0.13 g/L | 0.13 g/L |
| **Stabilizer** | No | No | CMC | Pectin | Xanthan gum |
| **Opacifier** | Yes, TiO2 | Yes, Population 2 | Yes, Population 2 | Yes, Population 2 | Yes, Population 2 |

Figure 24 shows the effect of the addition of stabilizers evaluated freshly prepared and after a standing time of 24 to 48 hours.

Figure 25 shows the neck of the bottle to evaluate the degree of sedimentation.

The addition of stabilizers maintains the cloudiness even after 48 hours, meaning the speed of sedimentation is decreased when adding a stabilizer. With Xanthan gum the sedimentation is slightly more than with pectin. Pectin shows there for the best stabilizing effect.

### Powdered soft drink at different temperature (influence of water temperature for PSD dissolution)

2 different PSD samples were prepared:
- Sample 1: PSD with **0.15 w% of TiO2**
- Sample 2: PSD with 0.80 w% of the cellulose particle population of Population 2

Sample 1 and 2 need to be diluted with the following water temperatures:
- **A** = **20°C as reference**
- **B = 10°C**
- **C = 100°C**

### Recipe and process

Standard powder soft drink (PSD) base:
1862 g Brazilian sugar
100 g Icing sugar
32 g Citric acid
6 g Tri-Calcium Phosphate
Mix for 10 minutes in the Kitchen Aid bowl
Process for colored PSD:
   300g uncolored PSD + color(s)
   Mix in Thermomix bowl for 2 minutes and 30 seconds, speed 4
   Reconstituted RTD:
      50g of PSD + 364.8g of tap water (10°C, 20°C or 100°C)
      The PSD solubilization was carried out in a glass beaker and with a magnetic stirrer.

### Evaluation

### Solubilization observation (+ videos)

TiO2 at 20 °C: PSD solubilization took 2 minutes (1st minute at 500 r/min and 2nd minute at 1000 r/min)
TiO2 at 10 °C: PSD solubilization takes longer than at 20°C and 100°C. 2 minutes and 30 seconds were necessary - 1st minute at 500 r/min and 2^{nd} minute at 1000 r/min.

TiO2 at 100 °C: PSD dissolved very easily (very good solubilization even after 1 minute) = 1st minute at 500 r/min and 2nd minute at 1000 r/min.

The cellulose particle population of Population 2 at 20 °C: PSD solubilization took 2 minutes (1st minute at 500 r/min and 2nd minute at 1000 r/min.)

The cellulose particle population of Population 2 at 10 °C: PSD solubilization longer than at 20°C and 100°C. 2 minutes and 30 seconds were necessary - 1st minute at 500 r/min and 2nd minute at 1000 r/min.

The cellulose particle population of Population 2 at 100 °C: PSD dissolved very easily (very good solubilization even after 1 minute) = 1st minute at 500 r/min and 2nd minute at 1000 r/min.

Conclusion Solubilization: The solubilization varied depending on the tap water temperature but is not impacted by TiO2 or the cellulose particle population of Population 2. The longest time for full solubilization is at 10 °C whereas at 100 °C the needed time is the shortest.

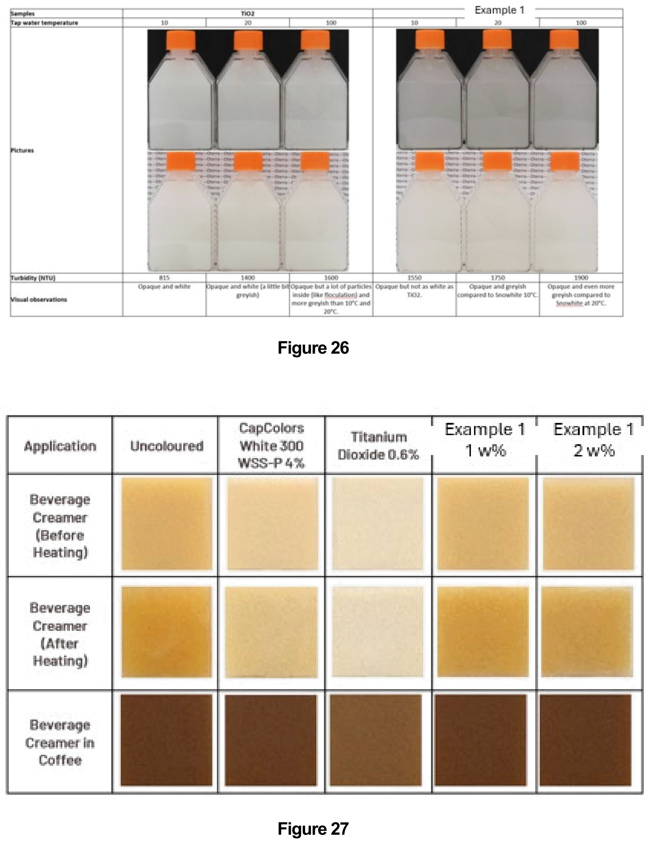

The turbidity measurement and visual evaluations are shown in Figure 26.

Evaluation: Samples were put in Iwaki flasks to observe their opacity, shade and differences. Samples made with TiO2 are whiter and seem to be opaquer than the cellulose particle population of Population 2. Another observation is that samples made with tap water at 10 °C are whiter, and they become greyer when 20 °C and 100 °C tap water were used. Turbidity was measured and was increased with the increased water temperature. The turbidity of the cellulose particle population of Population 2 is higher compared to TiO2 samples. TiO2 dissolved with 100°C tap water is not homogeneous and shows a lot of particles in suspension inside, like flocculation.

The same samples were evaluated under light:
In order to better visualize the samples, they were observed just under a light.
- The sample made with TiO2 at 10 °C tap water is opaque. The one at 20 °C tap water is less opaque, and it starts to see some particles. At 100 °C, the product is really heterogeneous with a lot of particles in suspension. This is especially the case for the sample with TiO2. Samples made with the cellulose particle population of Population 2 are quite similar, but the sample made with 100°C water is much less heterogeneous than the sample withTiO2. Conclusion: The tap water temperature impacts the rapidness and effectiveness of the PSD dissolution, whatever if the sample contains TiO2 or the cellulose particle population of Population 2. TiO2 samples look opaquer and whiter compared to the cellulose particle population of Population 2, but the turbidity measured by the turbidimeter indicates that the cellulose particle population of Population 2 are more turbid. For TiO2 and the cellulose particle population of Population 2, samples are whiter when 10 °C tap water was used, and they are greyer when the tap water temperature increases.
- The 100 °C tap water with TiO2 is clearly different from the others and presented a lot of particles in suspension.

### Example 16 - Coffee creamer:

### Beverage creamer/evaporated milk:

| **Ingredients** | **Dose (g)** | **Procedure** |
|---|---|---|
| **Beverage Creamer/Evaporated Milk (Marigold)** | 40 | 1. Mix powdered color thoroughly into each sample |
| | | 2. Transfer to an Iwaki flask and take Datacolor readings and photo |
| | | 3. Transfer to a blue-cap glass bottle and heat at 95°C for 5 min |
| | | 4. Transfer back to Iwaki flask and take Datacolor readings and photo |

### Coffee with beverage creamer/evaporated milk:

| Ingredients | Dose (g) | Procedure |
|---|---|---|
| Coffee (Nescafe Gold) | 80 | 1. Reconstitute coffee (for every 1.5g of coffee powder, add 150g of hot water) |
| Beverage with whitening agent Creamer/evaporated milk | 5 | |
| | | 2. Pour out 80g of coffee into a glass beaker |
| | | 3. To each beaker of coffee, add in respective colorec sample and mix well |
| | | 4. Transfer to an Iwaki flask and take Datacolor readings and photo |

The results are shown in Figure 27.
▪ TiO2 is the only white color given a lighter color in final application coffee
▪ Calcium carbonate gives a middle whitening effect in the creamer
▪ The cellulose particle population of Population 1 give a slight whitening effect in the creamer
▪ Anyway, both Calcium carbonate and the cellulose particle population of Population 1 do not show an according whitening effect like TiO2 in coffee

The color measurement values for beverage creamer (BC) are shown below.

| **Standard Name** | **L*** | **a*** | **b*** | **C*** | **h*** | **Standard Date** |
|---|---|---|---|---|---|---|
| Coffee+BC | 44.34 | 7.99 | 16.6 | 18.43 | 64.31 | 11-Sep-23 |

| **Batch Name** | **L*** | **a*** | **b*** | **C*** | **h*** | **CIE DE 2000** |
|---|---|---|---|---|---|---|
| Coffee+BC CC White 300 4% | 45.76 | 8.11 | 17.06 | 18.89 | 64.57 | 1.38 |
| Coffee+BC TiO2 0.6% | 52 | 7.41 | 19.17 | 20.55 | 68.86 | 7.81 |
| Coffee+BC Population 1 @ 1% | 44.94 | 7.89 | 16.78 | 18.55 | 64.81 | 0.59 |
| Coffee+BC Population 2 @ 2% | 45.08 | 7.93 | 16.83 | 18.61 | 64.77 | 0.72 |

### Example 17 - Plant based milk - Oat milk:

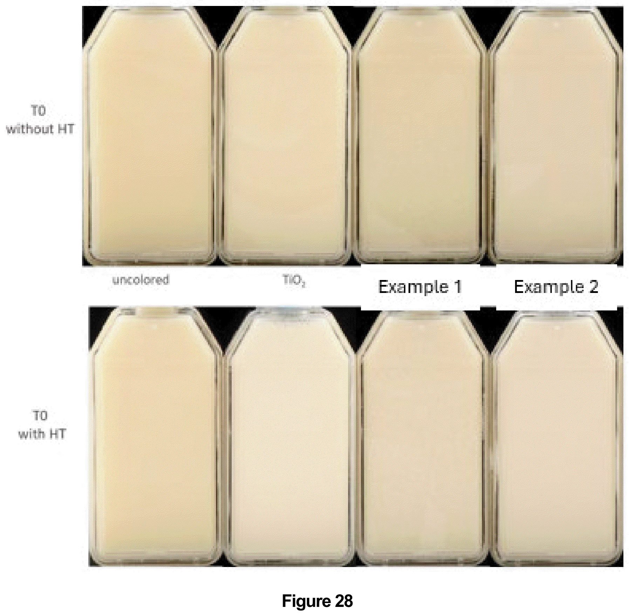

ALPRO OAT milk. The results are shown in Figure 28. From left to right: No whitening agent added, titanium dioxide, cellulose particle population of Population 2, cellulose particle population of Population 1.

The cellulose particle population of Population 1, sample 1 and 2 gives a whitening effect in oat milk and makes the yellow-brown background color of the oat milk visibly whiter and lighter and less yellow-brownish.

### Process pasteurization

- Heat the oat milk to 65 °C
- Add color
- Heat to 90 °C for 30 minutes
- Cool down in ice water until room temperature is reached

### Example 18: UHT treatment of oat milk and stability test

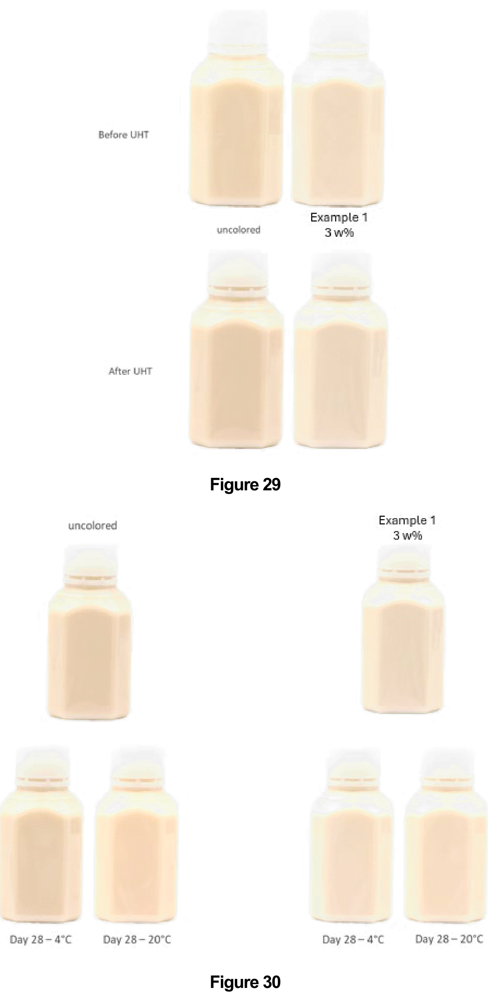

The results are shown in Figure 29.

**Table 5:**

| **Stability to UHT** | | **L** | **a** | **b** | **C** | **h** | **De2000** |
|---|---|---|---|---|---|---|---|
| **No whitening agent added** | before UHT | 77.88 | 0.5 | 18.16 | 18.17 | 88.42 | - |
| | after UHT | 78.94 | 1.15 | 17.34 | 17.38 | 86.2 | 1.17 |
| **Population 2** | before UHT | 81.73 | 0.49 | 16.36 | 16.37 | 88.29 | - |
| | after UHT | 82.15 | 0.81 | 16.22 | 16.24 | 87.13 | 0.5 |

**Table 6:**

| **AFTER UHT** | **L** | **a** | **b** | **C** | **h** | **De2000** |
|---|---|---|---|---|---|---|
| **No whitening agent added** | 78.94 | 1.15 | 17.34 | 17.38 | 86.2 | - |
| **Population 2** | 82.15 | 0.81 | 16.22 | 16.24 | 87.13 | 2.33 |

The cellulose particle population of Population 2 gives a significant and visible whitening effect to oat milk. This is underlined through the color measurement values, where the L*-value is 3 units higher for the sample colored with the cellulose particle population of Population 2.

The UHT impact was observed and evaluated as well. The uncolored oat milk is slightly more impacted by the heat. The uncolored sample becomes slightly duller and more brownish after the heating step. The cellulose particle population of Population 2 shows no significant visible differences.

Edible matrix: Alpro OAT drink.

### Process UHT

The cellulose particle population of Population 2 in powder form is added in the base and homogenized by mechanic and homo machine (1 pass 200 bar). Uncolored oat base is not homogenized.

Then the base is passed in the UHT pilot machine and heat treated at 120 °C for few seconds.

### Stability study

Both bottles are stored in 2 conditions for 4 weeks, 4 °C and 20 °C (ambient storage). Every week a color measurement is done.

### Color evaluation

Colors are measured with DataColor 1050, measured in reflection mode. The most important parameter is the lightness.

### Stability test:

Figure 30 shows the results of visual assessment of the oat milk stability study.

During 28 days at 4 °C, both the uncolored and the oat milk colored with the cellulose particle population of Population 2 have a very good color stability. The uncolored sample becomes very slightly darker whereas the cellulose particle population of Population 2 becomes very slightly lighter, but both are not significant.

Both samples become slightly browner, but with no impact on the whiteness.

At 20 °C, the cellulose particle population of Population 2 has a better stability than the uncolored oat milk. Even if the uncolored sample becomes lighter after 28 days, the cellulose particle population of Population 2 is still lighter at the end of the stability test. The whitening effect of the cellulose particle population of Population 2 is still very good and still visible after 28 days.

Conclusion: the cellulose particle population of Population 2 as powder sample - tested at 3% in oat milk - has a very good whitening effect. The cellulose particle population of Population 2 makes the uncolored oat base significantly whiter.

The cellulose particle population of Population 2 has a good robustness and stability to UHT (120 °C few seconds).

The stability over time shows that the cellulose particle population of Population 2 in oat milk has a very good stability, both at 4 °C and 20 °C. The whitening effect is maintained, and no sedimentation is observed during one month storage time.

### Example 19 - Plant-based yoghurt:

The cellulose particle population of Population 1 and 2 were not tested in plant-based yoghurt. We expect good whitening effect in this application.

### Example 20 - Fruit preparation / fruit slurries

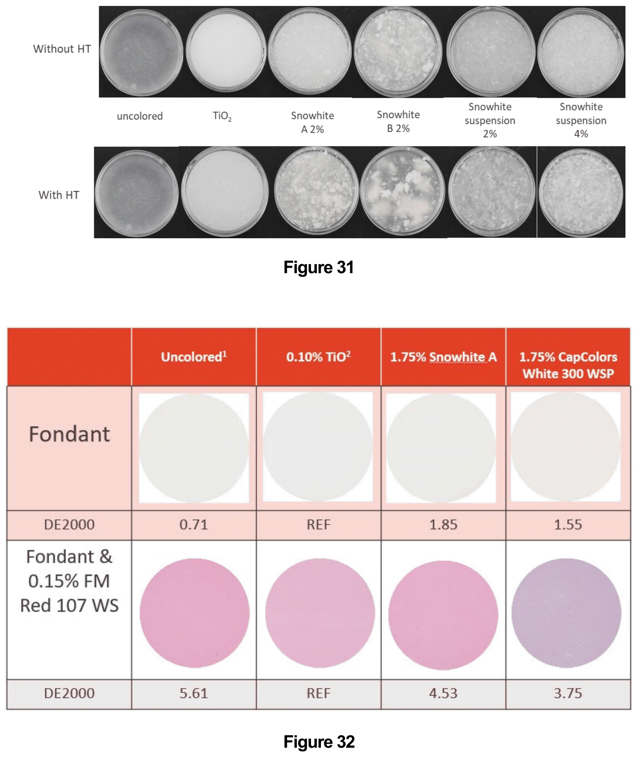

The results of Example 20 are shown in Figure 31.

The cellulose particle population of Population 1 in powder form and suspension are not adapted to a slurry application. All samples show strong flocculation. Although adding the cellulose particle population of Population 1 as suspension (pre-dispersed in water) is not helping. To conclude, the cellulose particle population of Population 1 cannot replace TiO2 in slurry application.

### Recipe:

▪ Oterra slurry recipe / 22.8°Bx ; pH 3.9 ▪ Ingredients 15 kg ▪ Sugar 2 985 g ▪ Starch(1) 525 g ▪ Guar gum(2) 45 g ▪ Citric Acid powder 29.4 g ▪ Sodium citrate powder 5.1 g ▪ Potassium sorbate 15 g ▪ Water 11 395.5 g

### Process for fruit slurry preparation:

**Blend A :** In a plastic beaker, blend ¼ of sugar and guar gum. Make a good dispersion of the guar gum in the sugar. Disperse this blend, under stirring, in 1/3 of water preheated at 80 °C in the microwave. Maintain in water-bath at 60 °C until to add in the Stephan. Before adding in the Stephan, check the good dissolution of pectin in the liquid blend.

**Blend B:** In a plastic beaker, blend 1/3 of water and the modified starch to obtain a starch milk.

In the Stephan cooker:
▪ Put ¾ of sugar and 1/3 of water, citric acid and sodium citrate in the Stephan.
▪ Start cooking: Use the mixing baffle during all the process and use knifes few seconds after each addition.
▪ Heat to 60 °C.
▪ Add Blend A, re-heat until 60 °C if necessary and blend for 1 min.
▪ Add Blend B and heat to 90 °C.
▪ Maintain temperature for 1 min.
▪ Add potassium sorbate and maintain temperature for 5 min
▪ Cool down the slurry in the Stephan cooker until 25-30 °C.

After cooling, check pH and °Brix (pH=3.8 ± 0.1, °Brix = 23 ± 3). pH can be adjusted with sodium citrate or citric acid.

Process for coloring the slurry
▪ Heat the slurry to 65 °C during 4 min in a pressure cooker
▪ Heat to 90 °C for 15 min in a water bath
▪ Add color
▪ Cold down in ice water until room temperature

### Example 21 - Bakery decoration / Fondant / Glazing

### Base (Food Service)

- Tim Hortons Icing - Ingredients: Sugars (Sugar, Glucose (Com Syrup), Water, Rowanberry Fruit Extract, Tapioca Flour, Cream of Tarter)

### Process

- Color(s) applied in 50 g of uncolored icing base heated 10 seconds in Microwave
- Hand mixed in small beakers

### Color evaluation

- Color measurement with DataColor 850 in small petri dishes
- Visual evaluations + Photos

Figure 32 shows the results of the visual color evaluation.

**Table 7: Color measurements values of TiO2 vs cellulose particle population of Population 1 with and without added black carrot concentrate in fondant.**

| | **Trial** | **L*** | **a*** | **b*** | **C*** | **h*** | **ΔE2000** |
|---|---|---|---|---|---|---|---|
| **0.1% TiO2** | **10A** | **91.39** | **-0.36** | **6.69** | **6.70** | **93.08** | |
| **2.5% Population 1** | **7A** | **88.71** | **-0.11** | **7.49** | **7.49** | **90.81** | **1.82** |
| **1.75% CapColors^{®} White 300 WSS-P** | **5A** | **89.26** | **0.06** | **7.36** | **7.36** | **89.53** | **1.55** |

The equivalent dosage of Titanium Dioxide to the cellulose particle population of Population 1 is about 17,5 times.

The equivalent dosage of Calcium carbonate is 17.5 times, and it increases the pH which causes anthocyanins to change shade and become bluer and is therefore only limited useable.

### Example 22 - Buttercream Frosting:

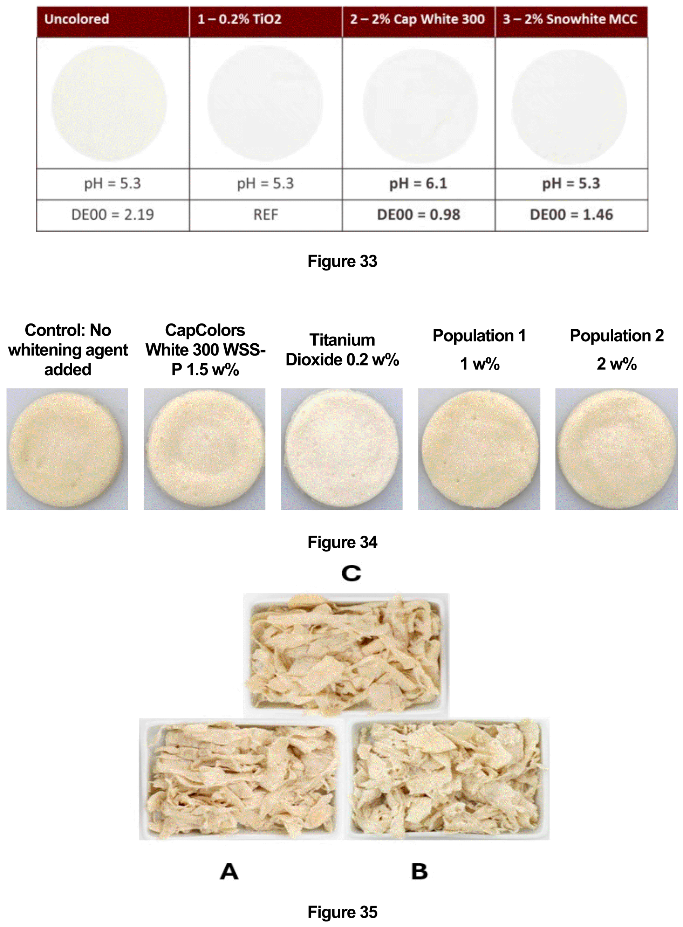

The results for example 22 are shown in Figure 33.

Base: Rich's Buttercream Frosting 24 % fat - INGREDIENTS FOR U.S. MARKET: SUGAR, VEGETABLE SHORTENING (PALM OIL, SOYBEAN OIL, MONO AND DIGLYCERIDES, POLYSORBATE 60), WATER, CORN SYRUP, CONTAINS LESS THAN 2% OF THE FOLLOWING: NATURAL AND ARTIFICIAL FLAVOR, NATURAL FLAVOR (CONTAINS MILK INGREDIENTS), SALT, TO PRESERVE FRESHNESS (SODIUM B ENZOATE, POTASSIUM SORBATE), MONO AND DIGLYCERIDES, GUAR GUM, CITRIC ACID, ARTIFICIAL COLOR.

**Table 12:**

| **Trial** | **Descriptions** | **Source** | **Dose** | **L** | **a** | **b** | **C** | **h** | **DE** |
|---|---|---|---|---|---|---|---|---|---|
| 1 | Ti02 - REF | Titanium Dioxide | 0.2% | **91.76** | 0.18 | 9.23 | 9.23 | 91.11 | --- |
| --- | Uncolored | Uncolored icing | 2.0% | 89.21 | -0.2 | 11.43 | 11.43 | 90.99 | 2.19 |
| 2 | CapColors White 300 WSP | Calcium Carbonate | 2.0% | **90.62** | 0 | 10.12 | 10.12 | 90.01 | **0.98** |
| 3 | The cellulose particle population of Population 2 | Cellulose | 2.0% | **90.08** | -0.14 | 10.69 | 10.69 | 90.76 | **1.46** |

### Color samples & evaluation

- Color measurement with DataColor 850 in small petri dishes
- Visual evaluations

Calcium Carbonate gives good whitening but increases the pH which may be an issue. The cellulose particle population of Population 2 gives also good whitening and does not impact the pH. The texture of the samples with added color became stiffer; except for the addition of titanium dioxide.

### Example 23 - Surimi:

The results of Example 23 are shown in Figure 34.
▪ Titanium Dioxide at 0.2 w% provided an obvious whitening effect to the surimi
▪ CapColors White 300 WSS-P at 1.5 w% also provided some whitening effect
▪ The cellulose particle population of Population 1 at 1 w% was not sufficient to lighten the surimi. At a higher dose of 2 w%, it provided some whitening effect, though minimal
▪ There were specks of white flakes present in surimi containing the cellulose particle population of Population 1 at 1 w% and 2w%

| **Ingredients** | **Dose (g)** | **Procedure** |
|---|---|---|
| Surimi Itoyori (threadfin bream) | 40 | 1. Thaw surimi block overnight in the fridge |
| | | 2. Crush some ice in a hand blender to cool down the bowl. Empty out and dry the bowl |
| | | 3. Add in surimi, salt and half the ice and mix at Speed 5 for 2 min, or until a smooth paste is obtained |
| | | 4. Add in the other ingredients (sugar, MSG, wheat starch, potato starch, egg white powder, vegetable oil, powdered color) and mix at Speed 2 for 30 s or until a smooth paste is obtained |
| | | 5. Add the remaining ice and mix at Speed 2 for 30 s or until a smooth paste is obtained |
| | | 6. Clingwrap a tray and place metal rings on top |
| | | 7. Portion out 40g of fish paste and shape in metal rings |
| | | 8. Cover with clingwrap |
| | | 9. Steam in the Combioven at 100% humidity for 30 min. |
| | | 10. Cool down before removing from metal rings |
| | | 11. Take Datacolor readings and photos of the samples |

### Color measurement values of Surimi

| **Standard Name** | **L*** | **a*** | **b*** | **C*** | **h*** | **Standard Date** |
|---|---|---|---|---|---|---|
| Surimi | 81.75 | -0.64 | 11.86 | 11.88 | 93.09 | 13-Sep-23 |
| Batch Name | L* | a* | b* | C* | h* | CIE DE 2000 |
| Surimi + CC White 300 1.5% | 85.43 | -0.09 | 12.16 | 12.16 | 90.43 | 2.57 |
| Surimi + TiO2 0.2% | 88.78 | -0.35 | 9.36 | 9.36 | 92.14 | 4.93 |
| Surimi + Population 1 @ 1% | 81.83 | -0.26 | 12.36 | 12.37 | 91.2 | 0.61 |
| Surimi + Population 1 @ 2% | 82.86 | -0.14 | 11.87 | 11.87 | 90.66 | 1 |

### Example 24 - Plant based meat type chicken:

The results of example 24 are shown in Figure 35:
▪ Figure 35A: Cellulose particle population of Population 2 at 3 w%
▪ Figure 35B: Cellulose particle population of Population 2 at 5 w%
▪ Figure 35C: Control without whitening agent

**Table 8:**

| | **uncolored** | **CapColors^{®} White 300 WSS-P 3 w%** | **Population 2 at 3 w%** |
|---|---|---|---|
| Lightness | 72.8 | 75.5 | 75.3 |
| Chroma | 16.6 | 15.6 | 15.3 |
| Hue | 84.0 | 84.7 | 84.6 |
| DE*2000 | Ref | 2.1 | 2.1 |

**Table 9:**

| | **Uncolored** | **CapColors^{®} White 300 WSS-P 5 w%** | **Population 2 at 5 w%** |
|---|---|---|---|
| Lightness | 72.8 | 76.4 | 75.7 |
| Chroma | 16.6 | 15.2 | 17.1 |
| Hue | 84.0 | 84.8 | 84.9 |
| DE*2000 | Ref | 2.8 | 2.2 |

### Conclusion:

Usage of the cellulose particle population of Population 2 in plant-based meat - chicken type significantly whitens TVP when re-hydrated

### Method:

▪ Dilute the colors with needed dosage in 100 g water - Mix the colored water with 50 g TVP (Unitex S-2010 : Textured vegetable protein wheat, soy, starch) directly in a vacuum bag: Seal the bag and use vacuum - Let the mass stand for 10 - 15 min; Perform visual color evaluation: Fry the re-hydrated TVP in a pan
▪ Samples to prepare (together with external partner):
   - Sample 1: no color
   - Sample 2: 3% of the cellulose particle population of Population 2
   - Sample 3: 5% of the cellulose particle population of Population 2

### Example 25 - Gravy - Retorted Cream Soup - 6 w% fat:

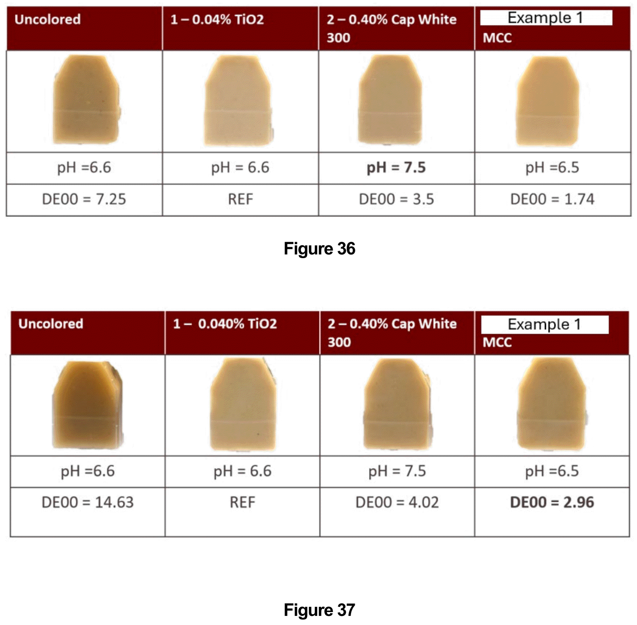

The results of Example 25 are shown in Figure 36 (before heating) and Figure 37 (after heating), with 0.40 of the cellulose particle population of Population 2.

**Table 10 - Color measurement values of Pre-Process (Un-Retorted) Cream Soup:**

| **Trial** | **Descriptions** | **Source** | **Dose** | **L** | **a** | **b** | **C** | **h** | **2000 DE** |
|---|---|---|---|---|---|---|---|---|---|
| 2 - REF | Ti02 | Titanium Dioxide | 0.04% | 72.24 | 4.99 | 17.78 | 18.46 | 74.33 | --- |
| 1 | Uncolored | Uncolored icing | --- | 63.17 | 5.67 | 18.77 | 19.61 | 73.19 | 7.25 |
| 3 | CapColors White 300 WSP | Calcium Carbonate | 0.40% | 67.72 | 4.88 | 17.37 | 18.04 | 74.31 | 3.50 |
| 6 | Population 2 | Microcrystalline Cellulose | 0.40% | 70.61 | 5.69 | 19.90 | 20.70 | 74.04 | 1.74 |

**Table 11 - Color measurement values of Cream Soup after Retorting Process:**

| **Trial** | **Descriptions** | **Source** | **Dose** | **L** | **a** | **b** | **C** | **h** | **2000 DE** |
|---|---|---|---|---|---|---|---|---|---|
| 2 - REF | Ti02 | Titanium Dioxide | 0.04% | 66.14 | 4.02 | 16.69 | 17.17 | 76.46 | --- |
| 1 | Without whitening agent | Uncolored icing | --- | 50.07 | 3.89 | 13.87 | 14.40 | 74.33 | 14.63 |
| 3 | CapColors White 300 WSP | Calcium Carbonate | 0.40% | 61.50 | 4.95 | 17.78 | 18.45 | 74.45 | 4.02 |
| 6 | Cellulose particle population of Population 2 | Microcrystalline Cellulose | 0.40% | 62.87 | 4.97 | 18.28 | 18.95 | 74.78 | 2.96 |

The cellulose particle population of Population 2 brings a clear visible whitening effect in a gravy. This is visible before and after the heat treatment. This is also underlined through the color measurement values. The L*-value of the sample with the cellulose particle population of Population 2 is 7 units higher for the gravy compared to the uncolored soup and close to the L*-value of TiO2 for the gravy before retorting process (the higher the L*-value, the whiter and lighter the product). The same tendencies can be seen for the color measurement values after retorting (clear whitening effect, shown through higher L*-value of the sample with the cellulose particle population of Population 2 compared to a sample without a whitening agent).

### Procedure:

▪ 10 minutes pre-hydration of the cellulose particle population of Population 2 in water with shear.
▪ Addition of butter & soy oil and blend for 2 minutes.
▪ Combine 25 g color, butter, oil « emulsion » with 75 g soup (gravy) base.
▪ Fill glass jars, seal and retort in autoclave for 30 minutes at 121 °C.

Color measurement with DataColor 850 readings in tissue flasks.

### Example 26 - Jelly gum

Figure 26 is showing the results of 2 different jelly gum recipes. Base 1 without added cellulose has a strong yellowish color, whereas base 2 is nearly transparent.

This difference in background color is explaining the visual difference in jelly gum when 3% of the Cellulose Particle Population is added.

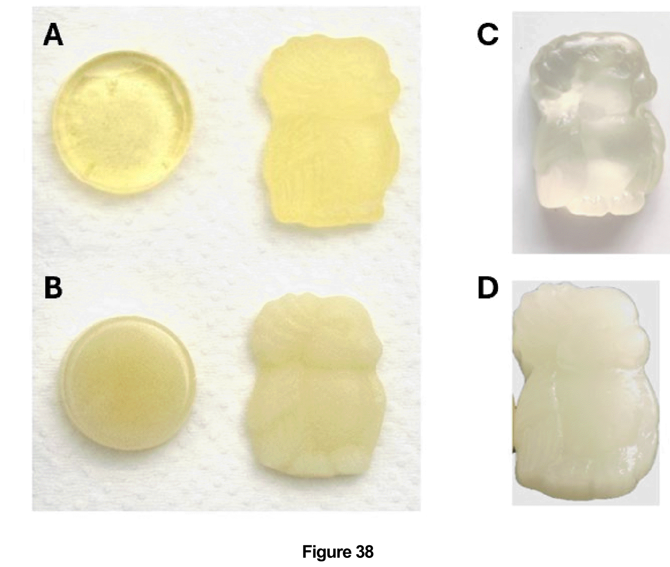

**Table 13: Jelly gum composition - Base 1 - Figure 38**

| **Component** | **Ingredient** | % |
|---|---|---|
| Gelatine | Gelatine 170 Bloom | 7.19 |
| | Water | 13.53 |
| Sugar Mix | Sugar | 25.14 |
| | Glucose Syrup | 38.67 |
| | Water | 15.47 |
| **Total** | | **100.00** |
| Acid | Citric Acid 50% Solution | 2%* |
| Colour | The cellulose particle population of Population 2 | 0.5%, 1%, 2%, 3%, 5% |

### Method for preparing Base 1:

1. Add deionized water at ~40 °C in a bowl and slowly pour gelatin onto the surface until an even layer forms. Stir in as gently as possible. Do not pour more gelatin until it is soaked. Repeat the hydration of gelatin until all gelatin is soaked
2. Stir gently without dragging air into the liquid to dissolve the gelatin. Occasionally warm up the gelatin mix in a water bath to ensure proper dissolution
3. Weigh glucose syrup, sugar and water in a clean and dry pan
4. Place a thermometer probe in the mixture and heat at medium heat till 117 °C
5. Remove from heat and cool to 90 °C
6. Add the gelatin mixture in and stir gently with a silicon spatula to avoid dragging air into the mixture
7. Pour the jelly gum mass into beakers and place them in a water bath at 60 °C. Use aluminum foil to cover the opening of each beaker
8. Working on one beaker at a time, add the colours to the jelly gum mass. Mix until even.
9. Add the citric acid solution and mix evenly
10. Cover the beaker with aluminum foil and leave in the water bath for a few minutes for the air bubbles to escape
11. Repeat the process with the other colours
12. Before molding, scrape off the foam on the surface
13. Pour the jelly gum into corn starch molds and cover thoroughly with com starch. Let it dry for approx. 48h
14. Remove jelly gum from the starch and clean off as much starch as possible
15. Coat the entire surface of each jelly gum with polish, either by shaking in a bag or painting onto the jelly gum. If too much polish is added, wipe off with tissue
16. Pack and seal the jelly gum in bags when finished

**Table 16: Jelly gum composition - Base 2 - Figure 38**

| **Component** | **Ingredient** | % |
|---|---|---|
| Gelatine | Porcine Gelatine, 210 - 230 Bloom, 8 Mesh | 5.34 |
| | Water | 13.55 |
| Sugar Mix | Sugar | 28.63 |
| | Glucose Syrup 40 DE | 38.17 |
| | Water | 14.31 |
| Total | | **100.00** |
| Acid | Citric Acid 50% Solution | 2%* |
| Colour | The cellulose particle population of Population 2 | 3% |

### Method for preparing Base 2

Prepare gelatin mix:
1. Dissolve gelatin into cold water and let it stay till the gelatin is swollen. Put it at 80 °C in the water bath and wait till the gelatin is melted.
2. In the meantime prepare sugar mix: Boil sucrose, glucose syrup and water until 117 □C is reached. Cool down to 90□ C.
3. Add the gelatin premix to the sugar mix and mix carefully until the mass is homogeneous.
   Pour the finished mass into a plastic beakers and use it directly or let it cool down and store at room temperature.
   Making jelly gums:
4. Prepare molds in starch using plaster molds
5. Weigh color into a beaker
6. Add jelly gum mass and mix carefully
7. Addition of citric acid :
   a. 1) If color is acid stable, dissolve color in the acid.
   b. 2) If color is sensitive to low pH, acid should be added as last ingredient when color is already pre-mixed with the jelly gum base
8. Stir carefully to prevent air bubbles
9. Deposit the gum mass into the starch molds using a funnel or a piping bag (caution: use gloves!) and leave to dry at room temperature for approx. 24 - 72 hours
10. Remove excess starch from the jelly gums using the dust collector
11. Polish jellies in a plastic bag with a few drops of polishing agent Capol 4468 D

### Example 27: Instant jelly dessert

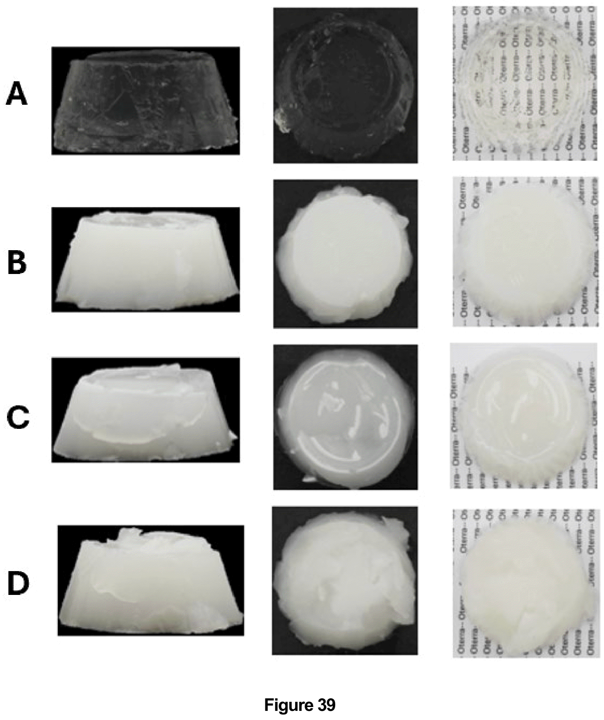

Figure 39 shows the whitening effect of TiO2 vs. Cellulose Particle Population 4 (stabilized with xanthan gum and dried glucose syrup) and Calcium Carbonate in jelly dessert.

All products give an intensive whitening effect to the uncolored jelly dessert mass. It needs to be noted that for Calcium Carbonate the recipe was prepared without citric acid as Calcium Carbonate cannot be used for acidic application (CO2 formation and strong foaming). In reality, this is not possible as the acid is needed for the flavor profile of the instant jelly dessert.

### Powder mix ingredients:

**⁽¹⁾ Gelatine: PB Gelatins 210Bloom/225Bloom (20mesh) or other mesh size Usage: 250g powder mix + 1000g water**

| | |
|---|---|
| ▪ Sucrose | 85% |
| ▪ Gelatine ⁽¹⁾ | 13,3% |
| ▪ Citric Acid, crystalline | 1,7% (target = pH 3.5) |

**Procedure to prepare an instant powder jelly:** Dry ingredients including colors are mixed together. The Jelly can be prepared in different ways:
a) Pot & plate: Powder mix is slowly added in boiling water.
b) Powder mix is slowly added in boiling water (water cooker + beaker or bowl)
   ▪ Jelly base is stirred until the powder is diluted completely -> this takes some minutes (appr. 2-5)
   ▪ Jelly is then cooled down to approx. 60°C, poured into beaker/container/flasks for evaluation and stored at 4-8°C for one night

**Storage:** The jelly can be stored in refrigerator for up to 1 week in their mould.

### Example 28: Glazings for bakery goods

The Cellulose particle population 3 was tested vs. no color added and CalciumCarbonate in donut glazing application.

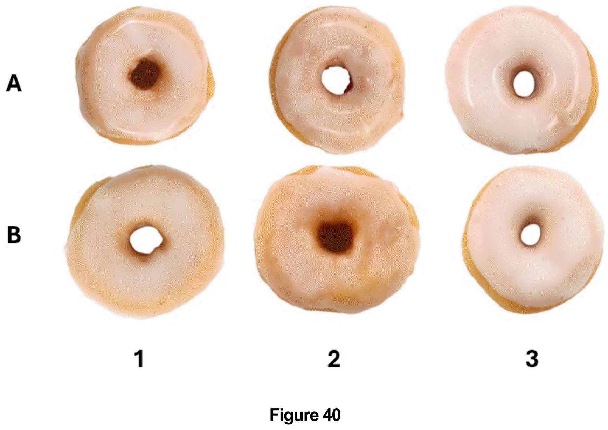

The cellulose particle population gives a whitening effect to the glazing and is much more opaque than uncolored glazing or glazing with added Calcium Carbonate. Figure 40 shows the results.

### Ingredients:

| | |
|---|---|
| 81.8 w% | Powdered Sugar |
| 1.6 w% | Cellulose Particle Population / CalciumCarbonate |
| 17.2 w% | Milk (3.5 % fat, UHT) |

**Procedure:** Mix all powder ingredients, add the milk. Mix everything until a homogenous paste is achieved. Apply 6 g on each donut (5 cm diameter).

## Claims

1. Use of a whitening, cloudifying or opacifying composition comprising
▪ a cellulose particle population having
- a mean average length (D50) of from 1000 to 5000 nm, as measured by scanning electron microscope (SEM),
- a mean average width (D50) of from 200 to 1000 nm, as measured by scanning electron microscope (SEM),
- a mean average aspect ratio (D50) of from 2 to 25, preferably from 2 to 18,
▪ optionally a colorant, Coloring Foodstuff or Juice Concentrate
for whitening, cloudifying, or opacifying an edible matrix,
wherein the edible matrix is food or beverage, and
wherein the concentration of the cellulose particle population is from 0.5 w% to 10.0 w%, preferably from 0.5 w% to 4 w%, even more preferably from 0.5 w% to 3 w% as compared to the total weight of the edible matrix after addition of the cellulose particle population.

2. The use according to claim 1, wherein the L* value at a given a* and b* value is increased by 2.5 points or more, preferably by 5 points or more even more preferably by 10 points or more as compared to a matrix without the cellulose particle population and wherein the L* value is measured by Datacolor 650/850/1050 and CIE L*a*b*-system in reflection mode for non-transparent food samples.

3. The use according to any one of the preceding claims, wherein the turbidity is increased when adding the cellulose particle population by 20 NTU points or more, preferably by 30 NTU points or more when the cellulose particle population is compared to a commercial available MCC in a dosage range between 0.05 g/L and 0.1 g/L and wherein the turbidity is measured by the amount of light scattered at the detector (Nephelometric Turbidity Units).

4. The use according to any one of the preceding claims, wherein no pigment is added to the whitening or opacifying composition.

5. The use according to any one of the preceding claims, wherein no pigment is present in the whitening or opacifying composition and wherein one or more pigments are added to the edible matrix.

6. The use according to claims 1 to 5, wherein a pigment is added to the whitening or opacifying composition.

7. The use according to any one of the preceding claims, wherein the family of pigment is one or more of the following. riboflavins, chlorophyll(in)s, caramels type A, B, C, D, fruit and vegetable concentrates, burnt sugars, vegetable carbon, carotenoids (comprising carotenes and xanthophylls, lycopene), apocarotenoids, betalains, anthocyanins, calcium carbonate, Iron oxides and hydroxides, curcuminoids, Tartrazine, Anthraquinones-based pigments and their lakes derivatives (comprising carminic acid and carmine-lakes), iridoids, phycobiliproteins, azaphilones, Azorubine and Carmoisine, Allura Red, Patent Blue, Indigotine, Indigo carmine, Brilliant Blue, Green S, Brilliant Black, Brown HT.

8. The use according to any of the preceding claims, wherein the food is one or more of a
▪ A confectionery product, preferably a hard-panned or a soft-panned confectionary product, even more hard-panned dragee, hard-panned chewing gum, a soft-panned jellybean, a soft-panned licorice egg, as well as jelly gum, an instant jelly dessert, and/or hard-boiled candy.
▪ A milk-based product or a milk-replacement product, preferably, a coffee creamer or a plant-based milk product, , wherein the milk-based product or the milk-replacement optionally are UHT-treated; a yoghurt product or a plant-based yoghurt product,
▪ A beverage product, preferably a non-alcoholic beverage product, even more preferably a non-alcoholic powdered soft drink or a water-based beverage product, such as water,
▪ A fruit-based product, preferably a fruit preparation or a fruit slurry,
▪ A decorative food product, such as bakery decoration, a fondant, or a glazing, or a buttercream frosting,
▪ A fish-based product, or a fish-replacement product, preferably, a surimi product,
▪ A meat-product or a plant-based meat product, preferably a plant-based chicken or turkey product;

9. The use according to any one of the preceding claims, wherein
a. The food matrix is a panned confectionary product, and the concentration of the cellulose particle population is from 2.5 w% to 10.0 w%, preferably from 2.5 w% to 5.0 w% calculated to the amount used in the panning syrup
b. The food matrix is another Confectionary product like jelly gum or hard-boiled candy, and the concentration of the cellulose particle population is from 0.25 w% - 6.0 w%, preferably from 1.0 w% to 3.0 w%
c. The food matrix is a beverage product, preferably a non-alcoholic beverage product, even more preferably a non-alcoholic powdered soft drink or a water-based beverage product, such as water powder soft drink and the concentration of the cellulose particle population is from 0.5 w% to 10.0 w%, preferably from 0.5 w% to 2.0 w% calculated to the amount used in powdered soft drink mix.
d. The food matrix is a milk-based product or a milk-replacement product, preferably, a coffee creamer or a plant-based milk product, wherein the milk-based product or the milk-replacement optionally are UHT-treated; a yoghurt product or a plant-based yoghurt product, and the concentration of the cellulose particle population is from 1.0 w% to 10.0 w%, preferably from 1.0 w% to 5 w%
e. The food matrix is a decorative food product, such as bakery decoration, a fondant, or a glazing, or a buttercream frosting, and the concentration of the cellulose particle population is from 1.0 w% to 4.0 w%, preferably from 1.5 w% to 3.0 w%
f. The food matrix is a fish-based product, or a fish-replacement product, preferably, a surimi product, and the concentration of the cellulose particle population is from 1.0 w% to 4.0 w%, preferably from 1.0 w% to 2.5 w%.
g. The food matrix is a meat-product or a plant-based meat product, preferably a plant-based chicken or turkey product, and the concentration of the cellulose particle population is from 1.5 w% to 7.5 w%, preferably from 2.5 w% to 5.0 w%
h. The food matrix is a Savoury product like a soup, sauce or dressing, and the concentration of the cellulose particle population is from 0.3 w% to 6.0 w%, preferably from 0.35 w% to 3.0 w%
